(19) Europäisches Patentamt
European Patent Office
Office européen des brevets

(11) **EP 4 411 761 A1**

(12) **EUROPÄISCHE PATENTANMELDUNG**

(43) Veröffentlichungstag:
**07.08.2024   Patentblatt 2024/32**

(21) Anmeldenummer: **24154546.6**

(22) Anmeldetag: **29.01.2024**

(51) Internationale Patentklassifikation (IPC):
**H01F 7/14** (2006.01)       **H01F 7/18** (2006.01)
**H02K 33/10** (2006.01)

(52) Gemeinsame Patentklassifikation (CPC):
**H01F 7/14; H01F 7/18; H02K 33/10;**
H01F 2007/1866

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **31.01.2023   DE 102023000282**

(71) Anmelder: **Pötsch, Edmund
86343 Königsbrunn (DE)**

(72) Erfinder: **Pötsch, Edmund
86343 KÖNIGSBRUNN (DE)**

(74) Vertreter: **Hehn, Christian Michael
Geraszell 76a
94344 Wiesenfelden (DE)**

(54) **PENDELANTRIEBS-ANSTEUERUNGSVORRICHTUNG UND
PENDELANTRIEBS-ANSTEUERUNGSVERFAHREN**

(57)    Die Erfindung betrifft eine Pendelantriebs-Ansteuerungsvorrichtung und ein Pendelantriebs-Ansteuerungsverfahren eines elektromagnetischen Pendelantriebs gemäß der internationalen Patentanmeldung WO 2021 160 219 A1, wobei die über die eigentliche Pendelschwingung hinaus gehende Schwingungsemission in den unterschiedlichen Anwendungen sowie mit deren Dämpfungs- oder Resonanzparametern des Pendelaktors durch einen Benutzer definiert unterhalb oder auf oder oberhalb einer menschlichen oder tierischen Wahrnehmungsschwelle senslim liegend veränderbar emittieren, indem Mittel zur erfindungsgemäßen Steuerung oder zur erfindungsgemäßen Regelung der Phasendifferenz zwischen einer Grundschwingung eines elektrischen Ansteuersignals und einer Grundschwingung des Pendelaktors bereitgestellt werden und durch ein Verfahren zur erfindungsgemäßen Steuerung oder zur erfindungsgemäßen Regelung der Phasendifferenz zwischen der Grundschwingung des elektrischen Ansteuersignals und der Grundschwingung des Pendelaktors erfolgt.

Fig. 2a

EP 4 411 761 A1

**Beschreibung**

Die Erfindung betrifft eine Pendelantriebs-Ansteuerungsvorrichtung und ein Pendelantriebs-Ansteuerungsverfahren eines elektromagnetischen Pendelantriebs, wie er in der internationalen Patentanmeldung WO 2021 160 219 A1 beschrieben ist.

Stand der Technik

Der elektromagnetische Pendelantrieb gemäß WO 2021 160 219 A1 erzeugt, auch wenn er grundsätzlich geräuschminimiert ist, beim Schwingen je nach Anwendung und Dämpfung des Pendelaktors eine über die eigentliche Pendelschwingung hinaus gehende, tierisch oder menschlich mehr oder weniger wahrnehmbare, Schwingungsemission.

Der Stand der Technik, die WO 2021 160 219 A1, erwähnt aus Gründen der Energieeffizienz einen Betrieb bei einer Resonanzfrequenz. Eine Ansteuerung der über die eigentliche Pendelschwingung hinaus gehenden menschlich oder tierisch wahrnehmbaren akustischen oder mechanischen Schwingungsemission durch einen Benutzer, insbesondere bei unterschiedlichen Dämpfungs- oder Resonanzparametern des Pendelaktors, ist in der WO 2021 160 219 A1 nicht spezifisch ausgeführt worden.

Aufgabe der Erfindung ist es deshalb beim elektromagnetischen Pendelantrieb, gemäß WO 2021 160 219 A1 und bei den darin genannten Anwendungen des elektromagnetischen Pendelantriebs, die über die eigentliche Pendelschwingung hinaus gehende Schwingung in den unterschiedlichen Anwendungen sowie mit deren Dämpfungs- oder Resonanzparametern des Pendelaktors durch den Benutzer definiert unterhalb oder auf oder oberhalb einer menschlichen oder tierischen Wahrnehmungsschwelle senslim liegend veränderbar zu emittieren.

Zusammenfassung der Erfindung

Die Aufgabe wird durch eine Pendelantriebs-Ansteuerungsvorrichtung gemäß den Merkmalen des unabhängigen Anspruchs 1 sowie durch ein Pendelantriebs-Ansteuerungsverfahren zur Einstellung der gewünschten sekundären Schwingungsemission umfassend die Schritte zur manuellen Steuerung gemäß den Merkmalen des unabhängigen Anspruchs 15 und durch ein Pendelantriebs-Ansteuerungsverfahren zur Einstellung der gewünschten sekundären Schwingungsemission umfassend die Schritte zur Regelung gemäß den Merkmalen des unabhängigen Anspruchs 16 gelöst. Weitere vorteilhafte Ausgestaltungen der Lösung finden sich in den abhängigen Ansprüchen.

Die Lösung dieser Aufgabe erfolgt durch Mittel zur erfindungsgemäßen Steuerung oder zur erfindungsgemäßen Regelung der Phasendifferenz zwischen einer Grundschwingung eines elektrischen Ansteuersignals us und einer Grundschwingung des Pendelaktors und durch ein Verfahren zur erfindungsgemäßen Steuerung oder zur erfindungsgemäßen Regelung der Phasendifferenz zwischen der Grundschwingung des elektrischen Ansteuersignals us und der Grundschwingung des Pendelaktors.

Ausgangspunkt ist ein elektromagnetischer Pendelantrieb gemäß der Offenbarung in der WO 2021 160 219 A1 in den dort beschriebenen Anwendungsbeispielen.

Steuerung und Regelung sind jeweils differenzierte Teilgebiete der Kybernetik. Die Unterschiede sind beispielsweise im Fachbuch "Mechatronik" 2. Auflage, 2008 von Horst Czichos ISBN 978-3-8348-0373-3 in Kapitel 4 konkret ausgeführt.

Das elektrische Ansteuersignal us zur Steuerung des elektromagnetischen Pendelaktors umfasst wenigstens über zwei aufeinander folgende Perioden hinweg ein periodisches Spannungssignal, welches in ein elektromagnetisches Ansteuerungssignal umgesetzt wird, indem es in der Spule des Pendelaktors einen periodischen Erregerstrom is mit einer periodischen Magnetfeldänderung hervorruft, welche den Pendelaktor in eine mechanische Schwingung fp(t) eines Pendels mit einer primären Schwingungsemission des Pendelaktors und einer sekundären Schwingungsemission des Pendelaktors versetzt. Die mechanische Schwingung fp(t) des Pendels wiederholt sich zumindest im Frequenzbereich kleiner gleich einer Pendelresonanzfrequenz fpres in wenigstens zwei aufeinanderfolgenden Perioden mit einer Periodendauer Tp oder mit einer Pendelwiederholfrequenz fp. Die mechanische Schwingung fp(t) des Pendels weist im Zeitbereich innerhalb einer Periode einen beliebigen Funktionsverlauf auf und kann per Fourier-Zerlegung als Amplitudenspektrum der Schwingungsemission im Frequenzbereich dargestellt werden. Im Frequenzbereich weist das Amplitudenspektrum der Schwingungsemission wenigstens einen Amplitudenanteil einer Grundwelle bei der Pendelwiederholfrequenz fp auf.

Oberhalb der Pendelresonanzfrequenz fpres können bei asynchroner Ansteuerung zwar im Zeitbereich stochastische, nichtperiodische mechanische Pendelschwingungen auftreten, diese weisen aber im Frequenzbereich der Schwingungsemission wenigstens einen Amplitudenanteil einer Grundwelle bei der Pendelwiederholfrequenz fp auf.

In Versuchsreihen zu Ursachen der Schwingungsemission wurde überraschend festgestellt, dass je nach Phasenlage der mechanischen Schwingung fp(t) des Pendels zum elektrischen Ansteuersignal us durch positive oder negative Beschleunigungseinträge zeitlich definierte oder infinitesimale mechanische Impulse entstehen, welche eine sekundäre Schwingungsemission mit einem mehr oder weniger wahrnehmbaren Amplitudenspektrum erzeugen.

Definitionen

Eine Schwingungsemission eines Pendelaktors umfasst eine primäre Schwingungsemission Eprimact und eine sekundäre Schwingungsemission Esekact mit mechanischen, akustisch oder taktil auf einer menschlichen oder tierischen Wahrnehmungsschwelle senslim oder oberhalb einer menschlichen oder tierischen Wahrnehmungsschwelle senslim oder unterhalb einer menschlich oder tierisch akustischen oder taktilen Wahrnehmungsschwelle senslim liegenden Amplitudenanteilen der Schwingungsemission, welche bei einer mechanischen Pendelschwingung fp(t) erzeugt werden. Die menschliche oder tierische Wahrnehmungsschwelle senslim im Sinne dieser Erfindung wird bei einem Schalldruck von $20 \cdot 10^{-6}$ Pa, entsprechend 0 dB festgelegt. Die Amplitudenanteile der primären Schwingungsemission Eprimact und der sekundären Schwingungsemission Esekact sind im Sinne der Erfindung im Zeitbereich als Funktionsverlauf und im Frequenzbereich als Amplitudenspektrum der Schwingungsemission darstellbar.

Die primäre Schwingungsemission Eprimact des Pendelaktors im Sinne dieser Erfindung umfasst eine Amplitude Aip1 einer harmonischen Grundwelle der mechanischen Pendelschwingung fp(t) bei der Pendelwiederholfrequenz fp.

Die sekundäre Schwingungsemission Esekact des Pendelaktors im Sinne dieser Erfindung umfasst Amplitudenanteile bei Frequenzen oberhalb der Frequenz der Grundwelle der mechanischen Pendelschwingung fp(t).

Ein Ansteuerfunktionsverlauf Fs(t) ist ein periodischer zeitlicher Verlauf des elektrischen Ansteuersignals us. Ein Pendelfunktionsverlauf Fp(t) ist ein periodischer zeitlicher Verlauf der mechanischen Schwingung fp(t) des Pendels. Der Ansteuerfunktionsverlauf Fs(t) und der Pendelfunktionsverlauf Fp(t) enthält jeweils bei einer nach Fourier zerlegten Analyse im Frequenzbereich eine harmonische sinusförmige Grundwelle.

Die Phasendifferenz zwischen der Grundwelle der mechanischen Schwingung fp(t) des Pendels bei der Pendelwiederholfrequenz fp und der Grundwelle des elektrischen Ansteuersignals us bei einer Ansteuerwiederholfrequenz fs des elektrischen Ansteuersignals us repräsentiert eine erfindungsgemäße Phasendifferenz cp(p-s).

Je nach dem Ansteuerfunktionsverlauf Fs(t) eines nicht rein sinusförmigen elektrischen Ansteuersignals us oder nach dem Pendelfunktionsverlauf Fp(t) einer nicht rein sinusförmigen mechanischen Pendelschwingung fp(t) enthält das elektrische Ansteuersignal us oder die mechanische Pendelschwingung fp(t) bei der Erfassung im Frequenzbereich einer nach Fourier zerlegten Analyse neben Amplitudenanteilen der Frequenz der harmonischen Grundwelle des elektrischen Ansteuersignals us oder der mechanischen Pendelschwingung fp(t) zusätzlich Amplitudenanteile bei Frequenzen im Spektrum oberhalb der Frequenz der harmonischen Grundwelle des elektrischen Ansteuersignals us oder der mechanischen Pendelschwingung fp(t). Falls das elektrische Ansteuersignal us oder die mechanische Pendelschwingung fp(t) einen von einer symmetrischen Nulllage abweichenden Offset aufweisen sollte, wird dieser im Frequenzspektrum durch einen Gleichanteil in der Amplitude bei der Frequenz 0 repräsentiert. Dies ist beispielsweise bei einem elektrischen Ansteuerungssignal us mit einem unipolaren Rechtecksignal oder bei einer gegenüber einer Nulllage asymmetrischen Pendelschwingung fp(t) der Fall.

Der elektromagnetische Pendelantrieb erzeugt über die mechanische Schwingung fp(t) die primäre Schwingungsemission Eprimact und die sekundäre Schwingungsemission Esekact. Die primäre Schwingungsemission Eprimact umfasst die Grundwelle der Schwingung des Pendelaktors. Die sekundäre Schwingungsemission Esekact umfasst Amplitudenanteile im Frequenzspektrum oberhalb der Grundwelle der Schwingung des Pendelaktors.

Der Pendelaktor ist bezüglich seiner Drehachse ein drehschwingungsfähiges mechanisches Feder-Massesystem mit einer je nach Ausführungsform auf den Pendelaktor wirkenden Dämpfung und mit einer definierten Eigenfrequenz, in der Folge Pendelresonanzfrequenz fpres genannt. Die Pendelresonanzfrequenz fpres ist abhängig von der konstruktiven Gestaltung des Pendelaktors, insbesondere von dessen schwingender exzentrischer Masse und von dessen Massenträgheitsmoment, sowie von den auf die schwingende Masse und auf das Massenträgheitsmoment wirkenden Rückstellkräften und von der auf das System wirkenden Dämpfung.

Die Masse und das Massenträgheitsmoment sind abhängig von der Formgebung, vom Volumen und von der spezifischen Masse der verwendeten Materialien des Pendelaktors und von der Position der Drehachse des Pendelaktors bezüglich des Masseschwerpunktes des Pendelaktors.

Die Pendelresonanzfrequenz fpres ist mithin abhängig von Bauteiletoleranzen, von Fertigungstoleranzen, sowie von der Formgebung, beispielsweise von potentiellen Auslegern oder vom Benutzer veränderbaren oder austauschbaren Komponenten des Pendelaktors, beispielsweise von austauschbaren verschiedenen Schwanzflossen eines künstlichem Angelköders oder von austauschbaren verschiedenen Massagefingern oder Massageaufsätzen bei der Verwendung des Antriebes in einem Massagestab oder von austauschbaren verschiedenen Fächeraufsätzen bei der Verwendung des Antriebes in einem Fächerventilator oder von austauschbaren verschiedenen Zahnbürstenaufsätzen bei der Verwendung des Antriebes in einer Zahnbürste etc.

Die Dämpfung D ist abhängig vom umgebenden Medium (beispielsweise Luft oder Wasser) und von der Formgestaltung der im jeweiligen Medium bewegten Fläche des Pendelaktors oder einer auf den Pendelaktor aufgesetzten Aktorfläche oder eines Auslegers des Pendelaktors. Daneben ist optional auch eine geschwindigkeitsproportionale Dämpfung, beispielsweise durch eine Wirbelstromdämpfung eines in einem Magnetfeld bewegten Leitermaterials am Pendelaktor möglich.

Ein phasenkritischer Frequenzbereich der Ansteuerung des Pendelaktors kann je nach Dämpfung D der Schwingung beispielsweise entweder bei

$$\text{fs} <= 0{,}01 * \text{fpres} \qquad \text{bis} \qquad \text{fs} >= 100 * \text{fpres} \qquad \text{mit D} >= 1{,}0$$

oder bei

$$\text{fs} <= 0{,}5 * \text{fpres} \qquad \text{bis} \qquad \text{fs} >= 1{,}5 * \text{fpres} \qquad \text{mit D} <= 0{,}1$$

liegen. Im phasenkritischen Frequenzbereich der Ansteuerung des Pendelaktors erfolgt ein Übergang vom Voreilen der Phase des Pendelaktors mit einer positiven Phasendifferenz $\varphi(p\text{-}s)$ zum Nacheilen der Phase des Pendelaktors mit einer negativen Phasendifferenz $\varphi(p\text{-}s)$ und geht im Punkt der Pendelresonanzfrequenz fpres gegen Null oder gegen ein Minimum, wodurch die Amplitudensumme der sekundären Schwingungsemission Esekact gegen Null oder gegen ein Minimum geht und wodurch über eine erfindungsgemäße Steuerung oder Regelung die sekundäre Schwingungsemission Esekact definiert vorgebbar oder minimierbar ist. Je nach Dämpfung D ist der Übergang von voreilender zu nacheilender Phase mehr oder weniger steil, d.h. eine Veränderung der Frequenz erzeugt einen mehr oder weniger steilen Übergang von der Phasenvoreilung (mit einer positiven Phasendifferenz $cp(p\text{-}s) <= +90°$) zur Phasennacheilung (mit einer negativen Phasendifferenz $cp(p\text{-}s) >= -90°$).

Die Pendelresonanzfrequenz fpres und die Dämpfung D können im Rahmen der unterschiedlichen Anwendungsbereiche des elektromagnetischen Pendelaktors und im Rahmen der vom Benutzer veränderbaren oder in der Fertigung variablen Parameter des elektromagnetischen Pendelaktors stark schwanken. Es ist deshalb erforderlich die Variation der Parameter bei der Bestimmung der gewünschten sekundären Schwingungsemission und bei der Vorgabe einer periodischen elektromagnetischen Ansteuerung zu berücksichtigen.

Die elektromagnetische periodische Ansteuerung des Pendelaktors umfasst eine Grundwelle des elektrischen Ansteuersignals us und je nach Verlauf des elektrischen Ansteuersignales us während wenigstens zweier aufeinanderfolgender zeitlicher Perioden bei nicht rein harmonischer Erregung zusätzliche Amplitudenanteile im Frequenzspektrum oberhalb der Grundwelle des elektrischen Ansteuersignales us. Das elektrische Ansteuersignal us kann beispielsweise im Ansteuerfunktionsverlauf Fs(t) innerhalb von wenigstens zwei aufeinanderfolgenden Perioden sinusförmigen, rechteckförmigen, impulsförmigen, trapezförmigen, dreieckförmigen, sägezahnförmigen oder einen beliebigen periodischen Verlauf umfassen.

Aufgrund der periodischen elektromagnetischen Ansteuerung führt der Pendelaktor eine periodische mechanische Pendelschwingung fp(t) aus. Die elektromagnetische Ansteuerung ist eine periodische Erregerfunktion, die innerhalb einer Ansteuerperiode Ts beliebigen Verlauf nehmen kann und sich in wenigstens zwei aufeinanderfolgenden Perioden wiederholt.

Der Pendelaktor liefert auf die Erregung durch die elektromagnetische Ansteuerung eine mechanische Schwingungsantwort mit einem periodischen Pendelfunktionsverlauf Fp(t), welcher sich in wenigstens zwei aufeinanderfolgenden Perioden wiederholt oder mit einer stochastischen Bewegung antwortet.

Die periodische Funktion der elektromagnetischen Ansteuerung und die periodische oder die stochastische mechanische Schwingungsantwort der mechanischen Pendelschwingung fp(t) der Periode Tp kann jeweils in eine Fourierreihe mit harmonischen Schwingungsanteilen zerlegt werden. Die Grundwelle der Fourierreihe ist der Amplitudenanteil, welcher bei der Pendelwiederholfrequenz fp auftritt. Sie repräsentiert die Grundwelle der mechanischen Schwingungsantwort des Pendelaktors auf die Erregung durch die elektromagnetische Ansteuerung.

Bei einer elektromagnetischen Ansteuerung des Pendelaktors mit einem Anteil der harmonischen Grundwelle des elektrischen Ansteuersignals us kleiner der Pendelresonanzfrequenz fpres des Pendelaktors eilt die Bewegung im Sinne einer Geschwindigkeit also einer Veränderung der Position pro Zeit der harmonischen Grundwelle des Pendelaktors der Bewegung (Geschwindigkeit) der harmonischen Grundwelle des elektromagnetischen Ansteuersignals us voraus. Die Phase der Grundwelle der Ansteuerung liegt hinter der Phase der Grundwelle der mechanischen Pendelschwingung fp(t). Die Phasendifferenz $\varphi(p\text{-}s)$ ist positiv. Das elektromagnetische Ansteuersignal us wirkt verzögernd auf die Bewegung (Geschwindigkeit) des Pendelaktors. Es erfolgt ein zeitlich definiert oder ein infinitesimal negativer Beschleunigungseintrag und ein durch negative Beschleunigung der Pendelmasse hervorgerufener negativer Kraftimpuls beziehungsweise negativer Momentenimpuls auf den Pendelaktor. Dadurch wird die mechanische Pendelschwingung fp(t) verzögert und dadurch abgebremst, es entsteht ein zeitlich definierter, bis infinitesimaler mechanischer Impuls durch Verzögerung, beziehungsweise durch negative Beschleunigung einer Masse, mit entsprechender Kraftentwicklung.

Der negative Kraftimpuls unterstützt eine sekundäre Schwingungsemission Esekact des Pendelaktors mit einem entsprechenden Amplitudenspektrum.

Bei einer Ansteuerung des Pendelaktors mit einer harmonischen Grundwelle des elektrischen Ansteuersignals us größer der Pendelresonanzfrequenz fpres des Pendelaktors läuft die Bewegung im Sinne einer Geschwindigkeit also einer Veränderung der Position pro Zeit der harmonischen Grundwelle des Pendelaktors der Bewegung (Geschwindigkeit) der harmonischen Grundwelle des Pendelaktors der Bewegung (Geschwindigkeit) der harmonischen Grundwelle des elektromagnetischen Ansteuersignals us nach. Die Phasendifferenz $\varphi$(p-s) ist negativ. Das elektromagnetische Ansteuersignal us wirkt beschleunigend auf die Bewegung (Geschwindigkeit) des Pendelaktors. Es erfolgt ein zeitlich definiert oder ein infinitesimal positiver Beschleunigungseintrag und ein durch Beschleunigung der Pendelmasse hervorgerufener zeitlich definierter, bis infinitesimaler mechanischer positiver Kraftimpuls auf den Pendelaktor.

Der positive Kraftimpuls unterstützt eine sekundäre Schwingungsemission Esekact des Pendelaktors mit einem entsprechenden Amplitudenspektrum.

Bei einer Ansteuerung des Pendelaktors mit einer harmonischen Grundwelle des elektrischen Ansteuersignals us im Bereich der Pendelresonanzfrequenz fpres des Pendelaktors nähert sich die die Phase der harmonischen Grundwelle des Pendelaktors mit einer Annäherung des Ansteuersignals us an die Pendelresonanzfrequenz fpres der Phase der harmonischen Grundwelle der mechanischen Pendelschwingung fp(t) an. Die Phasendifferenz $\varphi$(p-s) geht gegen Null. Ein positiver oder negativer Beschleunigungseintrag und ein durch Beschleunigung der Pendelmasse hervorgerufener Kraftimpuls auf den Pendelaktor geht dabei gegen Null oder nimmt einen minimalen Wert an.

Die sekundäre Schwingungsemission Esekact des Pendelaktors geht bei Ansteuerung des Pendelaktors auf der Pendelresonanzfrequenz fpres des Pendelaktors mit seinem emittierten Amplitudenspektrum gegen Null oder gegen einen minimalen Wert.

Beide Formen der Beschleunigung, sowohl der Verzögerungseintrag, als auch der Beschleunigungseintrag verursachen im Pendelaktor eine Beschleunigung, bzw. eine Verzögerung von Massen und erzeugen durch Kraftänderung oder durch Momentenänderung eine Schwingungsemission, welche zum einen Amplitudenanteile der primären Schwingungsemission mit der Frequenz der Grundschwingung, als auch Amplitudenanteile der sekundären Schwingungsemission mit Amplitudenanteilen bei höherer Frequenz als der Frequenz der Grundschwingung enthalten. Die Amplitudenanteile oberhalb der Frequenz der Grundschwingung können entweder unterhalb oder an oder oberhalb der Wahrnehmungsschwelle senslim von tierischen oder menschlichen Sinnesorganen liegen.

Sinnesorgane sind beispielsweise die verschiedenartigen Nervenzellen der Gehörorgane oder verschiedenartige Nervenzellen oder Rezeptoren von taktil oder haptisch empfindlichen Organen des menschlichen Körpers, insbesondere der Finger oder der Hand, der Hautoberfläche oder der Geschlechtsorgane, beispielsweise der Klitoris oder des Glans Penis, oder die verschiedenartigen Nervenzellen des tierischen Körpers, beispielsweise die Nerven des Seitenlinienorgans von Fischen oder anderen taktil empfindlichen tierischen Organen oder die Nerven des Gehörsinns von Tieren.

Bei einer Ansteuerung des Pendelaktors mit einem Ansteuersignal us mit einer Ansteuerwiederholfrequenz fs unterhalb der Pendelresonanzfrequenz fpres sind wegen der im zeitlich definierten oder infinitesimalen Eintrag impulsartigen Beschleunigung des Pendelaktors neben Amplitudenanteilen bei der Pendelwiederholfrequenz fp auch Amplitudenanteile bei Frequenzen oberhalb der Pendelwiederholfrequenz fp enthalten.

Bei einer Ansteuerung des Pendelaktors mit einem elektrischen Ansteuersignal us mit einer Grundfrequenz oberhalb der Pendelresonanzfrequenz fpres überwiegen neben der Grundwelle bei der Pendelwiederholfrequenz fp die harmonischen Beschleunigungsanteile des Pendelaktors und damit die Amplitudenanteile der Grundschwingung der Pendelresonanzfrequenz fpres und von Amplitudenanteilen bei Frequenzen der Oberschwingungen der Pendelresonanzfrequenz fpres. Daneben sind auch Amplitudenanteile durch asynchrone zeitlich definierte oder infinitesimale Beschleunigungseinträge oder Verzögerungseinträge enthalten. Diese können im Zeitbereich wegen der Asynchronität von Ansteuersignal us und der mechanischen Pendelschwingung fp(t) sehr unterschiedliche stochastische Verläufe aufweisen. Dieser Betriebsbereich ist vergleichbar mit dem chaotischen Schwingungsverhalten eines Doppelpendels.

Die Veränderung der Phasendifferenz cp(p-s) in Abhängigkeit vom Verhältnis der Frequenz der Grundwelle bei der Ansteuerwiederholfrequenz fs des Ansteuersignals us zur Pendelresonanzfrequenz fpres ist im phasenkritischen Bereich abhängig von der Dämpfung D, also vom den Pendelaktor umgebenden Medium (beispielsweise Luft oder Wasser) und von der Formgestaltung der im jeweiligen Medium bewegten Fläche des Pendelaktors oder einer auf den Pendelaktor aufgesetzten Aktorfläche oder eines Auslegers des Pendelaktors. Der Pendelaktor gibt die sekundäre Schwingungsemission über ein ihn umgebendes Medium, beispielsweise ein Fluid, wie ein Gas oder eine Flüssigkeit oder im direkten mechanischen Kontakt an eine mit Rezeptoren versehene Organoberfläche wie beispielsweise der Haut ab und überträgt diese an empfindliche Sinnesorgane, welche sich im Bereich des den Pendelaktor umgebenden Mediums oder im direkten mechanischen Kontakt mit dem Pendelaktor befinden.

Die Lage der Phasendifferenz cp(p-s) ist abhängig vom Verhältnis der Grundwelle des elektrischen Ansteuersignals us bei der Ansteuerwiederholfrequenz fs zur Pendelresonanzfrequenz fpres des Pendelaktors.

Der Übergang von einer positiven Phasendifferenz auf eine negative Phasendifferenz ist in seiner Steilheit abhängig von der Dämpfung D des Pendelaktors.

Auf der Basis dieses Zusammenhangs erfolgt eine Steuerung der Phasenlage der Grundwelle des elektrischen Ansteuersignals us und der Grundwelle der mechanischen Pendelschwingung fp(t) durch Veränderung der Ansteuerperiodendauer Ts oder der Ansteuerwiederholfrequenz fs=1/Ts des Ansteuersignals us nach der Funktion Fs(t). Dieser Effekt wird erfindungsgemäß genutzt, um durch Veränderung der Ansteuerwiederholfrequenz fs, insbesondere im dämpfungsabhängig definierten phasenkritischen Bereich der Pendelresonanzfrequenz fpres des Pendelaktors eine Steuerung der Phasenlage zwischen der Grundschwingung des Ansteuersignals us und der Grundschwingung des Pendelaktors zu erreichen und dadurch eine Einstellung der Gesamtamplitude der sekundären Schwingungsemission Esekact durchzuführen.

Dieser Effekt tritt auch im Bereich von Oberwellen der Grundschwingung des Pendelaktors auf und wird erfindungsgemäß auch in diesen phasenkritischen Frequenzbereichen durch Variation der Ansteuerfrequenz zur Steuerung der Phasendifferenz $\varphi(p-s)$ genutzt.

Die Beschleunigung, beziehungsweise Verzögerung der Masse des Pendelaktors, erzeugt einen Kraftimpuls oder einen Drehmomentenimpuls, welcher aufgrund seiner Bewegungsänderung eine Emission einer sekundären Schwingung des Aktorpendels hervorruft. Die Amplitude des Kraft- oder Drehmomentenimpulses ist abhängig von der Phasendifferenz $\varphi(p-s)$ zwischen der Grundwelle des Ansteuersignales us und der Grundwelle der Schwingung des Pendelaktors. Erfindungsgemäß erfolgt deshalb mit der Einstellung der Phasenlage zwischen der Grundschwingung des Ansteuersignals us und der Grundschwingung des Pendelaktors eine Steuerung des Amplitudenspektrums und damit der Gesamtamplitude der sekundären Schwingungsemission Esekact.

Das Amplitudenspektrum des Kraft- oder Drehmomentenimpulses bestimmt die höherfrequenten Anteile in der sekundären Schwingungsemission Esekact und ist abhängig von der Wahl des Ansteuerfunktionsverslaufs Fs(t) und der Ansteuerwiederholfrequenz des Ansteuersignals us in Bezug auf die Pendelresonanzfrequenz fpres des Pendelaktors. Dadurch erfolgt durch Steuerung der Phasenlage zwischen der Grundschwingung bei der Ansteuerwiederholfrequenz fs des Ansteuersignals us und der Grundschwingung bei der Wiederholfrequenz fp des Pendelaktors eine Steuerung des Anteils der gegenüber der Frequenz fpres der Grundschwingung des Pendelaktor hinausgehenden auch die höherfrequenten Amplitudenanteile umfassenden Frequenzanteile der sekundären Schwingungsemission Esekact des Pendelaktors.

Funktionsparameter des Ansteuersignals us umfassen die Funktion, das heißt den Signalverlauf im Zeitbereich, die Wiederholfrequenz beziehungsweise die Periodendauer, die Amplitude, optional einen Offset, optional eine Anzahl von Perioden >1 und optional eine Veränderungsrate der Parameter über einen definierten Zeitbereich, beispielsweise um eine definierte Veränderung der Funktion des Ansteuersignals us manuell zu steuern oder vorzugeben und über eine Regelung nachzuführen. Damit ist im Frequenzbereich die Verteilung der Amplituden auf einzelne Frequenzen des Frequenzspektrums und damit die Phasendifferenz $\varphi(p-s)$ und die damit verbundene sekundäre Schwingungsemission Esekact und der Beitrag von Amplitudenanteilen des Ansteuersignals us zur sekundären Schwingungsemission vorgebbar.

Die Phasendifferenz cp(p-s) ist mithin durch das Verhältnis der Ansteuerwiederholfrequenz fs der Grundwelle des Ansteuersignals us zur Pendelresonanzfrequenz fpres einstellbar. Da die Pendelresonanzfrequenz fpres parameterabhängig verschiedene Werte annehmen kann, sind erfindungsgemäß wenigstens Mittel zur Veränderung der Periodendauer Ts oder der Ansteuerwiederholfrequenz fs der Grundwelle des Ansteuersignals us vorgesehen.

Die erfindungsgemäße Ansteuerung der Phasenlage zwischen Ansteuersignal us und mechanischer Pendelschwingung fp(t) erfolgt durch Mittel zur Eingabe der Veränderung der Periodendauer oder der Ansteuerwiederholfrequenz fs oder der Amplitude der Grundwelle des Ansteuersignals us. Die Mittel zur Eingabe können Mittel zur Steuerung der Periodendauer Ts oder der Ansteuerwiederholfrequenz fs oder der Amplitude der Grundwelle des Ansteuersignals us durch den Benutzer umfassen, beispielsweise ein analoges oder digitales Potentiometer, einen oder mehrere Schalter, einen oder mehrere Taster zur Steuerung des Funktionsverlaufs oder der Frequenz oder der Amplitude des Signals eines Funktionsgenerators oder eine drahtgebundene oder drahtlose Schnittstelle zu einem Computer oder zu einem Smartphone zur digitalen Eingabe oder Programmierung eines integrierten Funktionsgenerators oder eines integrierten programmierbaren Mikrocontrollers oder Signalprozessors über welche der Funktionsverlauf oder die einzustellende Frequenz oder die Amplitude des Ansteuersignals us durch den Benutzer Programmeingabe oder per App vorgebbar ist.

Erstes Ausführungsbeispiel einer Steuerung

Der Benutzer verändert beim ersten Ausführungsbeispiel einer Steuerung über die Mittel zur Eingabe die Wiederholfrequenz der periodischen Funktion und damit die Ansteuerwiederholfrequenz fs der Grundwelle des Ansteuersignales us selbst so lange, bis eine angestrebte sekundäre Schwingungsemission Esekact durch den Pendelaktor erreicht ist. Optional kann zusätzlich die Amplitude der Grundwelle des Ansteuersignals us durch den Benutzer verändert werden. Vorteilhaft können eine oder mehrere bevorzugte Einstellungen für den späteren Wiederaufruf gespeichert werden oder es sind eine oder mehrere bevorzugte Einstellungen werkseitig für den alternativen Aufruf durch den Benutzer gespeichert. Die sekundäre Schwingungsemission Esekact wird durch den Benutzer entweder durch die Nerven seiner Sinnesorgane, beispielsweise durch die Gehörorgane oder durch taktil oder haptisch empfindliche Organe oder Rezeptoren wahrgenommen, falls diese oberhalb oder an der Wahrnehmungsschwelle senslim liegen oder der Benutzer erfasst die sekundäre Schwingungsemission Esekact über Sensoren mit Anzeige des aktuell erfassten objektiven Wertes, beispielsweise über ein einen akustischen Sensor, beispielsweise einen Wandler zur Umwandlung von mechanischen oder akustischen Schwingungen in analoge oder digitale elektrische Werte, beispielsweise über ein Mikrofon oder über einen taktil empfindlichen Sensor, wie beispielsweise einen Drucksensor oder einen Beschleunigungssensor oder über andere Mittel zur Umsetzung von mechanischen Schwingungspositionen oder Schwingungsbewegungen in kompatible analoge oder digitale elektrische Werte, beispielsweise einen optoelektronischen Sensor, einen kapazitiven Sensor, einen piezoelektrischen Sensor, einen induktiven Sensor, einen magnetischen Sensor oder dergleichen.

Die sekundäre Schwingungsemission Esekact wird durch den Benutzer oder ein Tier durch die Nerven seiner Sinnesorgane nicht mehr wahrgenommen, falls diese unterhalb der Wahrnehmungsschwelle senslim liegen. Beide Wahrnehmungsbereiche umfassen alternativ Bereiche der angestrebten sekundären Schwingungsemission.

Zweites Ausführungsbeispiel einer Regelung

Alternativ erfolgt im zweiten Ausführungsbeispiel einer selbsttätigen Regelung eine Vorgabe einer angestrebten sekundären Schwingungsemission Esektrg über eine werkseitige Einstellung und/oder über eine Eingabe über Mittel zur Eingabe durch den Benutzer.

Die Erfassung der sekundären Schwingungsemission Esekact und Umsetzung in ein analoges oder digitales elektrisches Signal Esekact* erfolgt bei der selbsttätigen Regelung über Mittel zur Istwerterfassung, beispielsweise über einen akustischen Sensor, beispielsweise einen Wandler zur Umwandlung von mechanischen oder akustischen Schwingungen in analoge oder digitale elektrische Werte, beispielsweise über ein Mikrofon oder über einen taktil empfindlichen Sensor, wie beispielsweise einen Drucksensor oder einen Beschleunigungssensor oder über andere Mittel zur Umsetzung von mechanischer Schwingungsposition oder Schwingungsbewegung in kompatible analoge oder digitale elektrische Werte, beispielsweise einen optoelektronischen Sensor, einen kapazitiven Sensor, einen piezoelektrischen Sensor, einen induktiven Sensor, einen magnetischen Sensor oder dergleichen.

Die selbsttätige Regelung erfolgt über einen analogen oder digitalen Regler innerhalb einer Ansteuerelektronik, beispielsweise über einen Mikroprozessor mit einem Programm zur selbsttätigen Einstellung und optional zum kontinuierlichen oder in definierten zeitlichen Abständen erfolgenden Nachstellen der Frequenz und optional der Amplitude der Grundwelle des Ansteuersignales us zur Regelung einer Phasendifferenz cp(p-s) zwischen der Grundwelle des Ansteuersignales us und der Grundwelle der mechanischen Pendelschwingung fp(t). Die Ansteuerungselektronik umfasst einen Regler und einen Funktionsgenerator, beispielsweise einen analogen Signalgenerator oder einen digitalen Mikrocontroller oder Signalprozessor. Der Regler bildet eine Differenz Desek zwischen der analogen oder digitalen Vorgabe einer sekundären Sollemission Esektrg* und der erfassten und vom Sensor in ein analoges oder digitales elektrisches Signal umgesetzten sekundären Istemission Esekact*. Der Regler stellt die Frequenz und damit die Phasendifferenz cp(p-s) zwischen der Grundwelle des Ansteuersignales us und der Grundwelle der mechanischen Pendelschwingung fp(t) so lange nach, bis die Differenz ein Minimum erreicht, wodurch die Abweichung zwischen Sollwert Esektrg* und Istwert Esekact* ein Minimum erreicht und selbsttätig durch den Regler nachregelbar ist.

Der elektromagnetische Pendelantrieb ist gemäß WO 2021 160 219 A1 für den Einsatz in einem künstlichen Angelköder oder beispielsweise für Spielzeuge oder technische Pendelanwendungen mit begrenzter elektrischer Antriebsenergie, beispielsweise in automotiven Anwendungen in der Luft- und Raumfahrt oder für solarbetriebene Pendelantriebe oder Pendelmotoren zum dauerhaften Einsatz auch bei geringer Lichtstärke, für Tauchroboter, für eigengeräuscharme Antriebe oder Aktoren, beispielsweise in Uhren, oder in der Robotik als Pendelaktor oder Pendelmotor zur geräuscharmen und effizienten Erzeugung dynamischer Kräfte, beispielsweise in Haushaltsgeräten wie Rasierapparaten, Zahnbürsten, Milchschäumern, Eirührern, Fächerventilatoren, insbesondere Handfächer, Massagestäben wie Vibratoren oder in der Medizintechnik, beispielsweise in der Zahntechnik zur Reinigung, zum schonenden Entfernen von Zahnstein oder dem Schleifen oder Polieren von Zähnen, in der Chirurgie zum Antrieb von elektrischen Skalpellen oder zum Antrieb von Pumpen für Körperflüssigkeiten oder für die Nahrungszufuhr oder zur dauerhaften geräuscharmen Massage oder Therapie sensibler Körperteile zur Kompensation oder zur Anregung von symmetrischen oder asymmetrischen Schwingungen in mechanischen oder akustischen Systemen oder dergleichen vorgesehen.

Die erfindungsgemäß steuerbare oder regelbare sekundäre Schwingungsemission Esekact liegt für diese Anwendungsfälle in ihrem Amplitudenspektrum entweder unterhalb oder an oder im Bereich der von der Vorrichtung erzeugbaren Werte oberhalb der Wahrnehmungsschwelle senslim durch tierische oder menschliche Sinnesorgane.

Die sekundäre Schwingungsemission Esekact ist erfindungsgemäß von Werten unterhalb der Wahrnehmungsschwelle senslim durch menschliche oder tierische Sinnesorgane bis im Bereich der von der Vorrichtung erzeugbaren Werte oberhalb der Wahrnehmungsschwelle senslim durch menschliche oder tierische Sinnesorgane in einer ersten Ausgestaltung steuerbar oder in einer zweiten Ausgestaltung regelbar.

Das Amplitudenspektrum der sekundären Schwingungsemission kann beispielsweise in der Anwendung als künstlicher Angelköder einerseits kleiner der Wahrnehmungsschwelle senslim durch das Seitenlinienorgan des Raubfisches gewählt werden, um diesen nicht zu irritieren. Andererseits kann das Amplitudenspektrum der sekundären Schwingungsemission beispielsweise in der Anwendung als künstlicher Angelköder im Bereich der von der Vorrichtung erzeugbaren Werte größer oder gleich der Wahrnehmungsschwelle senslim durch das Seitenlinienorgan des Raubfisches gewählt werden, um diesen durch Impulse eines vermeintlich kranken Fisches anzulocken.

In der alternativen Anwendung des Pendelantriebs als Fächerventilator ist es beispielsweise aus Sicht des Benutzers wünschenswert, dass der Pendelantrieb möglichst keine wahrnehmbare sekundäre Schwingungsemission Esekact abgibt, um möglichst geringe akustische und/oder taktile/haptische sekundäre Schwingungsemission Esekact zu erzeugen, welche etwa beispielsweise in der Hand des Benutzers oder bei einer Anwendung mit Anbringung im Bereich eines Schlafplatzes störend wirken könnte. Damit wird die Anwendung des Antriebes in akustisch beruhigter Umgebung, wie beispielsweise einem Konzert, am Schlafplatz oder in vergleichbarem Umfeld unterstützt. Ferner ist es Ziel dieser Anwendung, möglichst geringe mechanische Impulse, verursacht durch eine sekundäre Schwingungsemission Esekact, an die Hand oder an das Gehör des Benutzers oder an den Schlafplatz oder an das Gehör eines Schlafenden zu übertragen.

In einer alternativen Ausgestaltung der Erfindung ist es umgekehrt das Ziel, die sekundäre Schwingungsemission Esekact durch mechanische Emission im Bereich der taktilen oder haptischen Wahrnehmung in einen Bereich dahin zu steuern, wo die Amplitude der sekundären Schwingungsemission eine Anregung oder Stimulanz der wahrgenommenen Schwingungsemission erzeugen. Beispiele dafür sind die Massage oder die Stimulanz von menschlich empfindlichen Organen oder die Stimulanz von empfindlichen Rezeptoren mit verschiedenartigen Nervenzellen der Körperoberfläche, beispielsweise von erogenen Zonen, um dort körperempfindliche Stimulationen auszulösen. Dabei wird durch die erzeugte sekundäre Schwingungsemission Esekact eine Stimulanz im Amplitudenspektrum im Bereich der von der Vorrichtung erzeugbaren Werte oberhalb und zusätzlich zur Grundwelle des Pendelaktors Stimulanz durch taktil wahrnehmbaren mechanischen Anreiz der sensiblen Körperteile erreicht.

Alternativ ist es in anderen Einsatzfällen das Ziel der genannten Massageanwendungen oder der Stimulanz von menschlich empfindlichen Organen oder die Stimulanz von empfindlichen Rezeptoren mit verschiedenartigen Nervenzellen der Körperoberfläche, beispielsweise von erogenen Zonen, neben der primären Schwingungsemission möglichst wenig sekundäre Schwingungsemission Esekact zu erzeugen, um so eine möglichst homogene, sinusförmige primäre Schwingungsemission Eprimact abzugeben. In diesem Fall wird ein Betrieb mit einer Frequenz des Ansteuersignals us möglichst nahe an der Pendelresonanzfrequenz fpres durch den Benutzer angesteuert oder nach Vorgabe durch den Benutzer oder bereits werkseitig eingestellt durch eine Regelung eingeregelt.

Alternativ wird in anderen Einsatzfällen, beispielsweise bei den genannten Zahnreinigungsanwendungen oder in anderen der genannten Anwendungen des Pendelaktors durch die Steuerung der Phasendifferenz $\varphi(p\text{-}s)$ entweder ein in der Summe der sekundären Schwingungsemission im Beitrag möglichst niedriges, minimales oder ein definiertes innerhalb der vom Pendelaktor erzeugbaren Amplituden ein in der Summe der sekundären Schwingungsemission Esekact im Beitrag höheres Amplitudenspektrum an sekundärer Schwingungsemission erzeugt.

Ein Verfahren zur Einstellung der gewünschten sekundären Schwingungsemission umfasst neben der Bereitstellung der Pendelantriebs-Ansteuerungsvorrichtung alternativ A Schritte zur manuellen Steuerung oder B Schritte zur selbsttätigen Regelung.

**Kurze Beschreibung der begleitenden Figuren**

Diese und andere Merkmale der vorliegenden Erfindung ergeben sich aus der folgenden Beschreibung von bevorzugten Ausführungsformen der vorliegenden Erfindung, die nicht einschränkende Beispiele darstellen, wobei auf die folgenden Figuren Bezug genommen wird. Es zeigen,

Fig. 1a     ein Blockschaltbild einer erfindungsgemäßen Steuerung eines elektromagnetischen Pendelantriebes durch einen Benutzer,

Fig. 1b     einen Ausschnitt aus dem Blockschaltbild gemäß Fig. 1a, mit der Einzelheit eines Funktionsgenerators,

Fig. 2a     ein Blockschaltbild einer erfindungsgemäßen Regelung eines elektromagnetischen Pendelantriebes mit Vorgabe durch einen Benutzer,

Fig. 2b     einen Ausschnitt aus dem Blockschaltbild gemäß Fig. 2a, mit der Einzelheit des Funktionsgenerators,

Fig. 3      den Zusammenhang der Phasendifferenz $\varphi(p\text{-}s)$ vom normierten Verhältnis der Frequenz einer Grundwelle des Ansteuersingales fs bezogen auf eine Grundwelle der Pendelresonanzfrequenz fpres in einer Parameterdarstellung mit unterschiedlicher Dämpfung D,

Fig. 4      beispielhaft zwei Verläufe einer sekundären Schwingungsemission Esekact in Abhängigkeit vom normierten Verhältnis der Ansteuerwiederholfrequenz fs der Grundwelle des Ansteuersingales zur Grundwelle der Pendelresonanzfrequenz fpres bei unterschiedlicher Dämpfung D,

Fig. 5a    beispielhaft den Verlauf der Pendelschwingung fp(t) gemäß der Funktion Fp(t) einer im Wesentlichen rechteckförmigen Pendelschwingung zusammen mit der Funktion eines beispielhaften rechteckförmigen elektrischen Ansteuersignal Fs(t) jeweils im Zeitbereich,

Fig. 5b    im Frequenzbereich ein beispielhaftes näherungsweises Amplitudenspektrum Aip(f) der Pendelschwingung fp(t) aus Fig. 5a.


**Detaillierte Beschreibung bevorzugter Ausführungsbeispiele**

Gleiche Bauteile weisen gleiche Bezugszeichen auf.

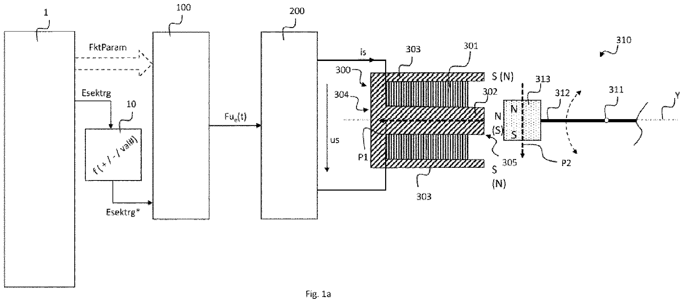

Fig. 1a zeigt ein Blockschaltbild einer erfindungsgemäßen Steuerung eines elektromagnetischen Pendelantriebes durch einen Benutzer 1. Eine Steuerung weist nach allgemeinem Verständnis keine Rückführung der Wirkung der Steuergröße auf die Stellgröße auf.

Der Benutzer 1 steuert in diesem Ausführungsbeispiel eine Vorrichtung durch eine Vorgabe eines Sollwertes Esektrg einer sekundären Schwingungsemission. Die Vorgabe ruft in einem Mittel zur Sollwerterfassung 10 entweder einen bereits werkseitig oder durch den Benutzer 1 vorher abgespeicherten Wert für den Sollwert Esektrg auf oder der Benutzer 1 kann über die Vorgabe in der Form "+" zur Erhöhung einer sekundären Schwingungsemission Esekact oder "-" zum Absenken einer sekundären Schwingungsemission Esekact oder die Auswahl eines Wertes einer sekundären Schwingungsemission Esekact treffen. Das Mittel zur Sollwerterfassung 10 wandelt die vom Benutzer getroffene Vorgabe eines Sollwertes der sekundären Schwingungsemission Esektrg um in einen elektrischen Sollwert der sekundären Schwingungsemission Esektrg*, welcher als Eingangsgröße eines Funktionsgenerators 100 zusammen mit optional durch den Benutzer 1 vorgebbaren Funktionsparametern FktParam die Erzeugung eines elektrischen Ansteuerungs-Funktionssignals Fue(t) des Funktionsgenerators 100 steuert.

Die Vorgabe des elektrischen Sollwertes der sekundären Schwingungsemission Esektrg* an den Funktionsgenerator 100 umfasst wenigstens eine Vorgabe einer Frequenz und einer Amplitude der Grundwelle zur Erzeugung des elektrischen Ansteuerungs-Funktionssignals Fue(t) oder eine Vorgabe einer Frequenz und einer Amplitude der Grundwelle zur Erzeugung des elektrischen Ansteuerungs-Funktionssignals Fue(t) und einer Änderung der Frequenz oder der Amplitude der Grundwelle zur Erzeugung des elektrischen Ansteuerungs-Funktionssignals Fue(t) im Funktionsgenerator 100, welches in einem Antriebstreiber 200 ein Ansteuersignal us zur Ansteuerung eines Pendelaktors erzeugt.

Durch seine Vorgaben verändert der Benutzer 1 die über den Funktionsgenerator 100 durch dessen Ausgangssignal, das elektrische Ansteuerungs-Funktionssignal Fue(t) im Antriebstreiber 200 erzeugte Grundwelle des Ansteuerungssignals us und eine Phasendifferenz φ(p-s) und damit die sekundäre Schwingungsemission Esekact.

Optional kann der Benutzer 1 durch Vorgabe von Funktionsparametern FktParam die Funktionsparameter zur Erzeugung des elektrischen Ansteuerungs-Funktionssignals Fue(t) des Funktionsgenerators 100 vorgeben, welche die Funktion, also den Verlauf des elektrisches Ansteuerungs-Funktionssignals Fue(t) im Zeitbereich, die Frequenz, die Amplitude, optional einen Offset, optional eine Anzahl von Perioden >1 und optional eine Veränderungsrate der Parameter über einen definierten Zeitbereich, beispielsweise um eine definierte Veränderung der Funktion des elektrischen Ansteuerungs-Funktionssignals Fue(t) steuern.

Das elektrische Ansteuerungs-Funktionssignal Fue(t) erzeugt im Antriebstreiber 200 das zur Steuerung des Pendelaktors erforderliche Ansteuersignal us mit dem über eine Erregerspule 301 fließenden Erregerstrom is, welcher einen elektromagnetischen Pendelaktor 310 mit seinen Elementen 300, 301, 302, 303, 304, 305, 311, 312 und 313 steuert und damit die sekundäre Schwingungsemission Esekact erzeugt.

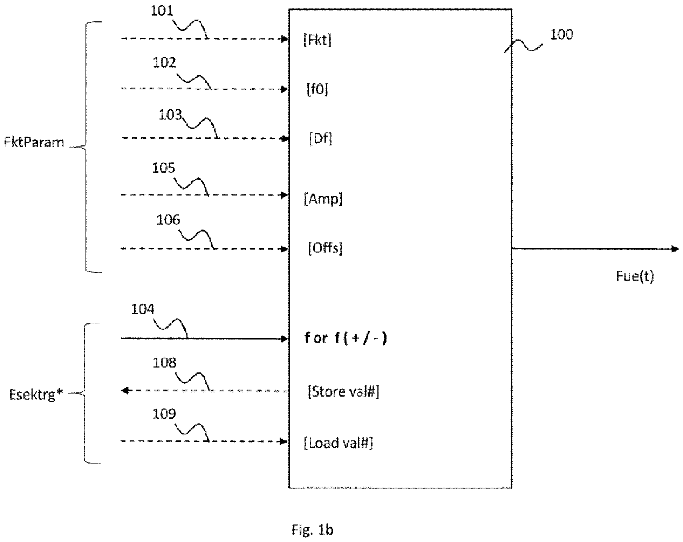

Fig. 1b stellt einen Ausschnitt aus dem Blockschaltbild gemäß Fig. 1a mit der Einzelheit des Funktionsgenerators 100 dar. Der Funktionsgenerator 100 verfügt über zwei Gruppen von Signalen, nämlich der Gruppe Esektrg* für die elektrischen Sollwerte der sekundären Schwingungsemission und die Gruppe der Funktionsparameter FktParam zur optionalen Eingabe von Funktionsparametern.

Die Gruppe Esektrg* für die elektrischen Sollwerte der sekundären Schwingungsemission umfasst wenigstens ein Signal 104 f zur Vorgabe einer Frequenz der Grundwelle zur Erzeugung des elektrischen Ansteuerungs-Funktionssignals Fue(t) oder eine Vorgabe einer Frequenz f der Grundwelle zur Erzeugung des elektrischen Ansteuerungs-Funktionssignals Fue(t) und einer Änderung f (+ / -) der Frequenz der Grundwelle zur Erzeugung des elektrischen Ansteuerungs-Funktionssignals Fue(t) im Funktionsgenerator 100. Optional kann der Benutzer 1 über eine Vorgabe Esektrg wählen, welche in einem Mittel 10 zur Sollwerterfassung (vgl. Fig. 1) entweder einen bereits werkseitig oder durch den Benutzer 1 vorher abgespeicherten Wert 108 für Esektrg* zur Bildung des elektrischen Sollwertes der sekundären Schwingungsemission Esektrg* gemäß einem vom Benutzer vorgebbaren Wert 1 09 für Esektrg* aufruft.

Die Gruppe der Funktionsparameter FktParam zur neben bereits vorher werkseitig oder benutzerdefiniert voreingestellten Funktionsparametern optionalen Eingabe von Funktionsparametern umfasst die Funktionsparameter zur Erzeugung des elektrischen Ansteuerungs-Funktionssignals Fue(t) des Funktionsgenerators 100, welche die Funktion, also den Verlauf des elektrischen Ansteuerungs-Funktionssignals Fue(t) im Zeitbereich, die Frequenz, die Amplitude, optional einen Offset, optional eine Anzahl von Perioden >1 und optional eine Veränderungsrate der Parameter über einen definierten Zeitbereich, beispielsweise um eine definierte Veränderung der Funktion des elektrischen Ansteuerungs-Funktionssignals Fue(t) steuern.

Das elektrische Ansteuerungs-Funktionssignal Fue(t) erzeugt im nachgeschalteten Antriebstreiber 200 das zur Steuerung des Pendelaktors erforderliche Ansteuersignal us (vgl. Fig 1a).

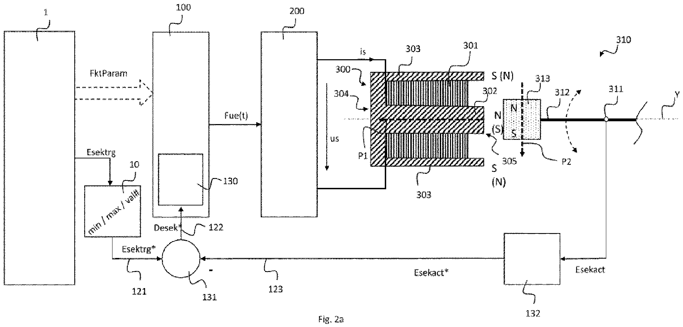

Fig. 2a zeigt ein Blockschaltbild einer erfindungsgemäßen Regelung eines elektromagnetischen Pendelantriebes mit Vorgabe durch einen Benutzer 1, wobei eine Regelung nach allgemeinem Verständnis eine Rückführung der Wirkung der Steuergröße auf die Stellgröße aufweist.

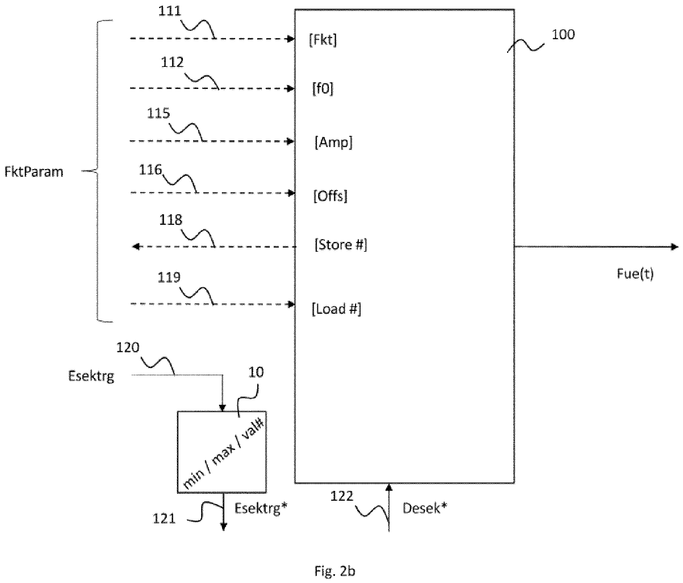

Der Benutzer 1 gibt in diesem Ausführungsbeispiel einer Vorrichtung einen Sollwerteiner sekundären Schwingungsemission Esektrg an ein Mittel zur Sollwerterfassung 10 vor. Die Vorgabe ruft in einem Mittel zur Sollwerterfassung 10 entweder einen bereits werkseitig oder durch den Benutzer 1 vorher abgespeicherten Wert 118 (siehe Fig. 2b) für Esektrg auf oder der Benutzer kann über Vorgabe in der Form "+" zur Erhöhung einer sekundären Schwingungsemission Esekact oder "-" zum Absenken einer sekundären Schwingungsemission Esekact oder eine Auswahl eines Wertes einer sekundären Schwingungsemission Esekact treffen. Das Mittel zur Sollwerterfassung 10 wandelt die vom Benutzer 1 getroffene Vorgabe eines Sollwertes der sekundären Schwingungsemission Esektrg um in einen elektrischen Sollwert der sekundären Schwingungsemission Esektrg*.

Die Vorgabe des elektrischen Sollwertes der sekundären Schwingungsemission Esektrg* umfasst wenigstens eine Vorgabe einer Frequenz und einer Amplitude der Grundwelle zur Erzeugung des elektrischen Ansteuerungs-Funktionssignals Fue(t) oder eine Vorgabe einer Frequenz und einer Amplitude der Grundwelle zur Erzeugung des elektrischen Ansteuerungs-Funktionssignals Fue(t) und einer Änderung der Frequenz oder der Amplitude der Grundwelle zur Erzeugung des elektrischen Ansteuerungs-Funktionssignals Fue(t) in einem Funktionsgenerator 100, welches in einem Antriebstreiber 200 ein Ansteuersignal us zur Ansteuerung eines Pendelaktors erzeugt.

Das Mittel 132 zur Erfassung des Istwertes der sekundären Schwingungsemission Esekact wandelt die mechanische Schwingungsemission des Pendelaktors um in einen elektrischen Istwert der sekundären Schwingungsemission Esekact*. Dieser wird in einem analogen oder digitalen Vergleicher 131 verglichen mit dem elektrischen Sollwert Esektrg*, welcher vom Mittel zur Sollwerterfassung 10 bereitgestellt wird. Das Ergebnis des Vergleichs im analogen oder digitalen Vergleicher 131 wird durch ein Differenzsignal Desek 122 repräsentiert, welches die Eingangsgröße eines Reglermoduls 130 bildet. Das Reglermodul 130, das im Funktionsgenerator 100 angeordnet ist, verändert die Frequenz oder die Amplitude der Grundwelle des elektrischen Ansteuerungs-Funktionssignals Fue(t) und oder die Funktionsparameter durch Wobbeln kontinuierlich oder in definierten zeitlichen Abständen und in einem definierten, werkseitig vorgegebenen oder vom Benutzer vorgebbaren Frequenzbereich und in werkseitig vorgegebenen oder vom Benutzer vorgebbaren oder durch vom Reglermodul 130 anpassbaren, modulierbaren Veränderungsschritten der Frequenz oder der Amplitude dahingehend, dass das Differenzsignal Desek 122 ein Minimum einnimmt.

Dadurch wird erfindungsgemäß erreicht, dass sich kontinuierlich oder in definierten zeitlichen Abständen der vom Benutzer 1 vorgegebene Wert Esektrg mit einer größtmöglichen Annäherung einstellt, auch wenn sich zwischenzeitlich so genannte Störgrößen, wie die Bedingungen der Pendelresonanzfrequenz fpres, beispielsweise durch Veränderung eines Auslegers oder der bewegten Form oder Fläche des Pendelaktors oder durch Veränderung der Dämpfung D des Pendelaktors, beispielsweise durch Veränderung des physikalischen Zustands oder der Zusammensetzung des umgebenden Fluids oder ein anderer, auf die sekundäre Emission Esekact einwirkenden Parameter geändert haben sollten.

Durch seine Vorgaben verändert der Benutzer 1 die über den Funktionsgenerator 100 und die über dessen Reglermodul 130 nachgeführte und im Antriebstreiber 200 erzeugte Grundwelle des Ansteuerungssignals us, die Phasendifferenz $\varphi$(p-s) und damit die sekundäre Schwingungsemission Esekact.

Optional kann der Benutzer 1 zusätzlich durch Vorgabe von Funktionsparametern FktParam die Funktionsparameter zur Erzeugung und zur Regelung des elektrischen Ansteuerungs-Funktionssignals Fue(t) des Funktionsgenerators 100 vorgeben, welche dadurch die Funktion des elektrischen Ansteuerungs-Funktionssignals Fue(t) im Zeitbereich, die Frequenz, die Amplitude, optional einen Offset, optional eine Anzahl von Perioden >1 und optional eine Veränderungsrate der Parameter über einen definierten Zeitbereich, beispielsweise um eine definierte Veränderung der Funktion des elektrischen Ansteuerungs-Funktionssignals Fue(t) innerhalb eines Reglermoduls 130 des Funktionsgenerators 100 vorgeben.

Das elektrische Ansteuerungs-Funktionssignal Fue(t) erzeugt auch im Ausführungsbeispiel einer Regelung im Antriebstreiber 200 das zur Steuerung des Pendelaktors erforderliche Ansteuersignal us mit dem über eine Erregerspule 301 fließenden Erregerstrom is, welcher einen elektromagnetischen Pendelaktor 310 mit seinen Elementen 300, 301, 302, 303, 304, 305, 311, 312 und 313 steuert und damit die sekundäre Schwingungsemission Esekact erzeugt.

Fig. 2b stellt einen Ausschnitt aus dem Blockschaltbild gemäß Fig. 2a mit der Einzelheit des Funktionsgenerators 100 dar. Der Funktionsgenerator 100 verfügt auch in diesem Ausführungsbeispiel der Regelung über zwei Gruppen von Signalen, nämlich der Vorgabe für die Sollwerte der sekundären Schwingungsemission Esektrg, welche über das Mittel zur Sollwerterfassung 10 umgewandelt werden in den elektrischen Sollwert Esektrg* und in die Gruppe der Funktionsparameter FktParam 111, 112, 115, 116, 118, 119 zur optionalen Eingabe von Funktionsparametern. Eine Vorgabe der Esektrg für die Sollwerte der sekundären Schwingungsemission wird im Mittel zur Sollwerterfassung 10 umgesetzt in den elektrischen Sollwert der sekundären Schwingungsemission Esektrg*, welcher als Signal 121 einem analogen oder digitalen Vergleicher 131 zum Vergleich mit dem Istwert der sekundären Schwingungsemission Esekact* (siehe Fig. 2 a) bereitgestellt wird. Das Ergebnis des Vergleichs im analogen oder digitalen Vergleicher 131 wird durch das Differenzsignal Desek 122 repräsentiert, welches die Eingangsgröße des Reglermoduls 130 (siehe Fig. 2 a) bildet. Das Reglermodul 130 verändert die Frequenz oder die Amplitude der Grundwelle des elektrischen Ansteuerungs-Funktionssignals Fue(t) und oder die Funktionsparameter dahingehend, dass das Differenzsignal Desek 122 ein Minimum einnimmt.

Die Gruppe der Funktionsparameter FktParam zur neben bereits vorher werkseitig oder benutzerdefiniert voreingestellten Funktionsparametern optionalen Eingabe von Funktionsparametern umfasst die Funktionsparameter zur Erzeugung des elektrischen Ansteuerungs-Funktionssignals Fue(t) des Funktionsgenerators 100, welche die Funktion, also den Verlauf des elektrisches Ansteuerungs-Funktionssignals Fue(t) im Zeitbereich, die Frequenz, die Amplitude, optional einen Offset, optional eine Anzahl von Perioden >1 und optional eine Veränderungsrate der Parameter über einen definierten Zeitbereich, beispielsweise um eine definierte Veränderung der Funktion des elektrischen Ansteuerungs-Funktionssignals Fue(t) steuern. Damit ist im Frequenzbereich sowohl die Verteilung der einzelnen Amplitudenanteile bei den einzelnen Frequenzen des emittierten Spektrums und damit die Phasendifferenz $\varphi(p\text{-}s)$ und die Höhe der Beiträge der einzelnen Amplitudenanteile bei den einzelnen Frequenzen des emittierten Spektrums auf die sekundäre Schwingungsemission Esekact vorgebbar.

Das elektrische Ansteuerungs-Funktionssignal Fue(t) erzeugt im nachgeschalteten Antriebstreiber 200 (siehe Fig. 2 a) das zur Steuerung des Pendelaktors erforderliche Ansteuersignal us.

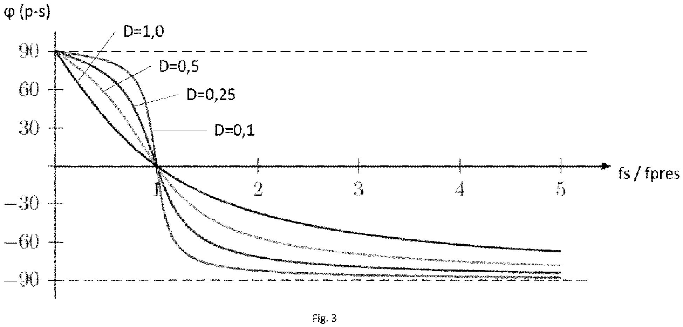

Fig. 3 zeigt den Zusammenhang einer Phasendifferenz $\varphi(p\text{-}s)$ vom normierten Verhältnis einer Ansteuerwiederholfrequenz fs einer Grundwelle eines Ansteuersingales us bezogen auf eine Grundwelle einer Pendelresonanzfrequenz fpres in einer Parameterdarstellung mit unterschiedlicher Dämpfung D.

Die Bezugsgröße der Pendelresonanzfrequenz fpres ist abhängig von Bauteiletoleranzen, von Fertigungstoleranzen sowie von der Formgebung, beispielsweise von potentiellen Auslegern oder vom Benutzer veränderbaren oder austauschbaren Komponenten des Pendelaktors, beispielsweise von austauschbaren verschiedenen Schwanzflossen eines künstlichem Angelköders oder von austauschbaren verschiedenen Massagefingern oder Massageaufsätzen bei der Verwendung des Antriebes in einem Massagestab oder von austauschbaren verschiedenen Fächeraufsätzen bei der Verwendung des Antriebes in einem Fächerventilator oder von austauschbaren verschiedenen Zahnbürstenaufsätzen bei der Verwendung des Antriebes in einer Zahnbürste etc.

Die Dämpfung D ist abhängig vom umgebenden Medium (beispielsweise Luft oder Wasser), dessen physikalischem Zustand und von der Formgestaltung der im jeweiligen Medium schwingenden Fläche des Pendelaktors oder einer auf den Pendelaktor aufgesetzten Aktorfläche oder eines Auslegers des Pendelaktors. Ein phasenkritischer Frequenzbereich der Ansteuerung des Pendelaktors bei der Pendelresonanzfrequenz fpres kann je nach Dämpfung D der Schwingung einen Frequenzbereich für die Grundwelle des Ansteuersignals us beispielsweise bei Frequenzen im Bereich von

$$fs = 0{,}01 * fpres \quad bis \quad >100*fpres \quad mit\ D = 1{,}0$$

oder bei

$$fs = 0{,}5 * fpres \quad bis \quad 1{,}5* fpres \quad mit\ D <= 0{,}1$$

und bei dazwischen liegenden Dämpfungswerten im in Fig. 3 beispielhaft dargestellten Übergangsbereichen liegen. Im phasenkritischen Frequenzbereich der Ansteuerung des Pendelaktors erfolgt ein Übergang vom Voreilen der Phase mit einer positiven Phasendifferenz cp(p-s) zum Nacheilen der Phase mit einer negativen Phasendifferenz $\varphi(p\text{-}s)$ und geht im Punkt der Pendelresonanzfrequenz fpres gegen Null, wodurch die Amplitudensumme einer sekundären Schwingungsemission Esekact gegen Null oder gegen einen minimalen Wert geht und damit durch eine erfindungsgemäße Steuerung oder Regelung unter anderem auch minimierbar ist. Je nach Dämpfung D ist der Übergang von voreilender zu nacheilender Phasendifferenz cp(p-s) mehr oder weniger steil, d.h. eine Veränderung der Frequenz erzeugt einen mehr oder weniger steilen Übergang von der Phasenvoreilung (mit einer positiven Phasendifferenz $\varphi(p\text{-}s) <= +90°$) zur Phasennacheilung (mit einer negativen Phasendifferenz $\varphi(p\text{-}s) >= -90°$).

Die Veränderung der Phasendifferenz cp(p-s) ist im phasenkritischen Bereich abhängig von der Dämpfung D, also vom den Pendelaktor umgebenden Medium (beispielsweise Luft oder Wasser), dessen physikalischem Zustand und von der Formgestaltung der im jeweiligen Medium schwingenden Fläche des Pendelaktors oder einer auf den Pendelaktor aufgesetzten Aktorfläche oder eines Auslegers des Pendelaktors. Der Pendelaktor gibt die sekundäre Schwingungsemission Esekact über ein ihn umgebendes Medium, beispielsweise ein Fluid, wie ein Gas oder eine Flüssigkeit oder direkt an eine mit Rezeptoren versehene Organoberfläche wie beispielsweise der menschlichen oder tierischen Haut ab und überträgt diese an empfindliche Sinnesorgane, welche sich im Bereich des den Pendelaktor umgebenden Mediums oder im direkten Kontakt mit dem Pendelaktor befinden.

Die Phasendifferenz cp(p-s) ist abhängig vom normierten Verhältnis der Frequenz fs der Grundwelle des elektromagnetischen Ansteuersignals us zur Pendelresonanzfrequenz fpres des Pendelaktors.

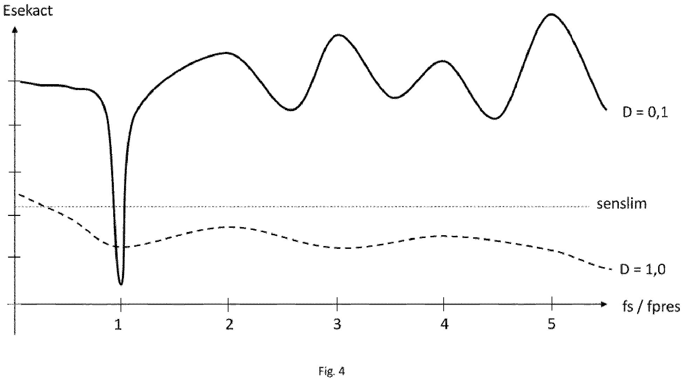

Fig. 4 zeigt beispielhaft zwei Verläufe einer sekundären Schwingungsemission Esekact in Abhängigkeit vom normierten Verhältnis der Frequenz einer Grundwelle eines Ansteuersingales fs zu einer Grundwelle einer Pendelresonanzfrequenz fpres bei unterschiedlicher Dämpfung D.

Die sekundäre Schwingungsemission Esekact kann dabei in Abhängigkeit von einer Grundwelle eines elektromagnetischen Ansteuersignals us vom Benutzer entweder oberhalb oder unterhalb einer Wahrnehmungsschwelle senslim gesteuert oder geregelt werden.

Bei geringer Dämpfung D=0,1 mit einer Ansteuerung fs im Bereich der Resonanzfrequenz fpres wird der in der Frequenzveränderung scharfbandige Bereich der Steuerbarkeit oder Regelbarkeit einer minimalen sekundären Schwingungsemission deutlich. Dieser Bereich ist bei einer Steuerung oder Regelung des Pendelaktors für eine minimale sekundäre Schwingungsemission Esekact erfindungsgemäß besonders vorteilhaft.

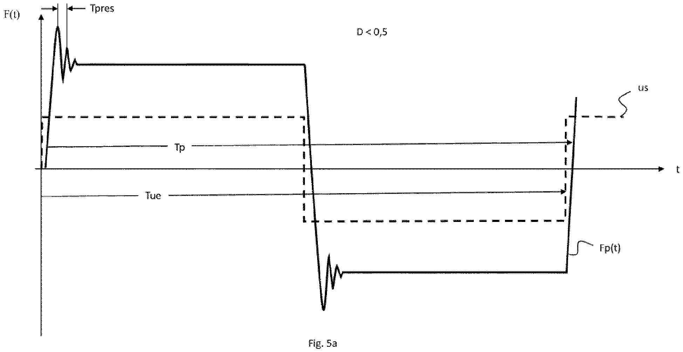

Fig. 5a zeigt beispielhaft die Funktion Fp(t) der Position einer im Wesentlichen rechteckförmigen Pendelschwingung fp(t) zusammen mit der Funktion eines beispielhaften rechteckförmigen elektrischen Ansteuerungs-Funktionssignals Fue(t) mit dem daraus aus einem Antriebstreiber 200 resultierenden Verlauf eines Ansteuersignals us, jeweils im Zeitbereich.

Die Funktion des rechteckförmigen elektrischen Ansteuersignals us weist in diesem Beispiel im Zeitbereich einen bipolaren Spannungsverlauf mit einer Periodendauer Tue und damit einer Wiederholfrequenz fs= 1/Tue auf. Im Frequenzbereich (nicht dargestellt) weist dieses Signal eine harmonische Grundwelle mit einem Amplitudenanteil bei einer Ansteuerwiederholfrequenz fs auf.

Daneben weist das rechteckförmige Signal eine Reihe von Amplitudenanteilen bei Frequenzen > fs auf. Im Zeitbereich addieren sich die Amplitudenanteile zum zeitlichen Verlauf der Funktion des rechteckförmigen elektrischen Ansteuersignals us.

Der Pendelaktor antwortet auf die vom Ansteuersignal us über einen Erregerstrom is in einer Spule 301 erzeugte elektromagnetische Ansteuerung mit einer Funktion der Position der Pendelschwingung Fp(t).

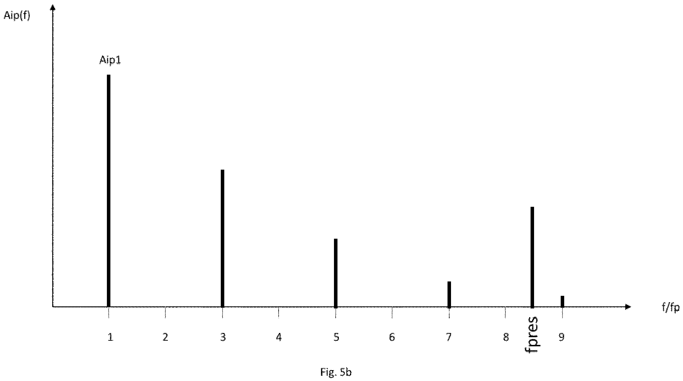

Die Funktion der nur annähernd rechteckförmigen Antwort der Position der Pendelschwingung Fp(t) weist in diesem Beispiel einen Verlauf mit einer Periodendauer Tp und einer Wiederholfrequenz fp= 1/Tp und eine gedämpfte Schwingung im Einschwingbereich mit einer Periodendauer Tpres oder einer Pendelresonanzfrequenz fpres = 1/Tpres auf. Im Frequenzbereich (vergleiche Fig. 5b) weist die Pendelschwingung Fp(t) eine harmonische Grundwelle Aip1 mit einem Amplitudenanteil bei der Wiederholfrequenz fp und neben höherfrequenten Amplitudenanteilen Aip(f) einen Amplitudenanteil bei der Pendelresonanzfrequenz fpres = 1/Tpres auf. Vorteilhaft kann im Fall einer selbsttätigen Regelung dieser Amplitudenanteil bei der Pendelresonanzfrequenz fpres als Orientierungswert für eine Bestimmung der Pendelresonanzfrequenz fpres herangezogen werden. Daneben weist die im Wesentlichen rechteckförmige Antwort der Position der Pendelschwingung Fp(t) eine Reihe von Amplitudenanteilen bei Frequenzen > fp auf. Im Zeitbereich addieren sich die Amplitudenanteile zum Verlauf der Funktion der Position der Pendelschwingung Fp(t).

Fig. 5b zeigt im Frequenzbereich ein beispielhaftes näherungsweises Amplitudenspektrum Aip(f) der Pendelschwingung Fp(t) aus Fig. 5a. Die Grundwelle mit dem höchsten Amplitudenanteil liegt bei f/fp = 1, also bei der Wiederholfrequenz fp der Pendelschwingung. Zur Bildung des im Wesentlichen rechteckförmigen Funktionsverlaufs der Pendelschwingung im Zeitbereich sind im Frequenzbereich mehrere höherfrequente Amplitudenanteile erforderlich, die sich in Summe zum im Wesentlichen rechteckförmigen Funktionsverlauf der Pendelschwingung im Zeitbereich (vgl. Fig.5a) ergänzen. Zusätzlich ist das Amplitudenspektrum bei der Frequenz des Einschwingvorgangs vorhanden. Der Einschwingvorgang hat sein Amplitudenspektrum bei der Pendelresonanzfrequenz fpres des Pendelaktors.

Die Pendelantriebs-Ansteuerungsvorrichtung kann Mittel zum Verändern und zum Feststellen einer Phasendifferenz cp(p-s) zwischen einer Grundwelle der mechanischen Pendelschwingung fp(t) und einer Grundwelle des elektrischen Ansteuersignals us umfassen, über welche eine sekundäre Schwingungsemission Esekact des Pendelaktors durch einen Benutzer 1 vorgebbar ist.

Die Pendelantriebs-Ansteuerungsvorrichtung kann die Mittel zum Verändern und zum Feststellen einer Phasendifferenz cp(p-s) über ein Mittel zum Verändern und zum Feststellen der Ansteuerwiederholfrequenz fs der Grundwelle des elektrischen Ansteuersignals us umfassen.

Die Pendelantriebs-Ansteuerungsvorrichtung kann Mittel zum Verändern und zum Feststellen einer Phasendifferenz φ(p-s) und Mittel zum Verändern und zum Feststellen der Amplitude der Grundwelle des elektrischen Ansteuersignals us umfassen.

Das elektrische Ansteuersignal us der Pendelantriebs-Ansteuerungsvorrichtung kann vorteilhaft von einem Funktionsgenerator 100 erzeugt werden.

Der Funktionsgenerator 100 kann vorteilhafterweise Mittel zur Eingabe von Funktionsparametern FktParam umfassen.

Die Funktionsparameter FktParam können vorteilhafterweise den zeitlichen Verlauf und die Amplitude eines elektrischen Ansteuerungs-Funktionssignals Fue(t), optional einen Offset, optional eine Anzahl von Perioden >1 und optional eine Veränderungsrate der Parameter über einen definierten Zeitbereich umfassen.

Die Pendelantriebs-Ansteuerungsvorrichtung kann vorteilhafterweise Mittel zur Vorgabe einer Sollemission Esektrg und Mittel zur Umwandlung der Sollemission Esektrg in einen elektrischen Sollwert der sekundären Schwingungsemission Esektrg* umfassen.

Die Pendelantriebs-Ansteuerungsvorrichtung kann Mittel zur Erfassung eines Istwertes der sekundären Schwingungsemission Esekact und Mittel zur Umwandlung eines Istwertes der sekundären Schwingungsemission Esekact in einen elektrischen Istwert der sekundären Schwingungsemission Esekact* umfassen.

Die Pendelantriebs-Ansteuerungsvorrichtung kann einen Vergleich des Sollwertes Esekact* mit dem Istwert Esekact* der sekundären Schwingungsemission Esekact* umfassen, wobei das Ergebnis des Vergleichs in einem analogen oder digitalen Vergleicher 131 durch ein Differenzsignal Desek 122 repräsentiert wird, welches die Eingangsgröße eines Reglermoduls 130 bildet und das Reglermodul 130 die Frequenz oder die Amplitude der Grundwelle des elektrischen Ansteuerungs-Funktionssignals Fue(t) dahingehend verändert, dass das Differenzsignal Desek 122 ein Minimum einnimmt.

Alternativ kann das Reglermodul 130 die Funktionsparameter FktParam dahingehend verändern, dass das Differenzsignal Desek 122 ein Minimum einnimmt.

In der im Stand der Technik zitierten Druckschrift WO 2021 160 219 A1 ist ein elektromagnetischer Pendelantrieb in unterschiedlichen Anwendungsbeispielen offenbart.

Die Pendelantriebs-Ansteuerungsvorrichtung umfasst einen elektromagnetischen Pendelantrieb umfassend eine elektronische Steuerungseinheit und einen Elektromagnet 300 umfassend eine Erregerspule 301 mit einer ersten Polachse P1 und einen Pendelaktor umfassend einen Dauermagneten 313 mit einer zweiten Polachse P2 und einen Pendelhebel 312, wobei aufgrund einer magnetischen Krafteinwirkung durch ein magnetisches Kraftfeld des Elektromagneten 300 der Dauermagnet 313 quer zu einer Längsachse Y des elektromagnetischen Pendelantriebs bewegbar ist, wobei die Erregerspule 301 mit der ersten Polachse P1 zur Längsachse Y in einen Winkel im Bereich von 0° +/- 30° angeordnet ist und der Dauermagnet mit der zweiten Polachse P2 zur Längsachse Y in einem Winkel im Bereich von 90°+/- 40° angeordnet ist, wobei die elektronische Steuerungseinheit Mittel zum Verändern und zum Feststellen einer Phasendifferenz cp(p-s) zwischen einer Grundwelle der mechanischen Pendelschwingung fp(t) und einer Grundwelle des elektrischen Ansteuersignals us umfasst, über welche eine sekundäre Schwingungsemission Esekact des Pendelaktors durch einen Benutzer 1 vorgebbar ist.

Ein Verfahren zur Einstellung der gewünschten sekundären Schwingungsemission umfasst alternativ die folgenden Schritte A zur manuellen Steuerung oder B zur selbsttätigen Regelung:

1. Bereitstellen eines elektromagnetischen Pendelaktors umfassend einen elektromagnetischen Pendelantrieb umfassend eine elektronische Steuerungseinheit und einen Elektromagnet 300 umfassend eine Erregerspule 301 mit einer ersten Polachse P1 und einen Pendelaktor umfassend einen Dauermagneten 313 mit einer zweiten Polachse (P2) und einen Pendelhebel (312), wobei aufgrund einer magnetischen Krafteinwirkung durch ein magnetisches Kraftfeld des Elektromagneten 300 der Dauermagnet 313 quer zu einer Längsachse Y des elektromagnetischen Pendelantriebs bewegbar ist, wobei die Erregerspule 301 mit der ersten Polachse P1 zur Längsachse Y in einen Winkel im Bereich von 0° +/- 30° angeordnet ist und der Dauermagnet mit der zweiten Polachse (P2) zur Längsachse (Y) in einem Winkel im Bereich von 90° +/- 40° angeordnet ist.

2. Bereitstellen einer erfindungsgemäßen Pendelantriebs-Ansteuerungsvorrichtung und eines Funktionsgenerators 100 zur Einstellung einer Phasendifferenz cp(p-s) zwischen einer Grundwelle eines Ansteuersignales us und einer Grundwelle einer mechanischen Pendelschwingung fp(t) mit einem Pendelfunktionsverlauf Fp(t).

3. Variation der Frequenz oder der Amplitude der Grundwelle des Ansteuersignales us zur Steuerung der Phasendifferenz cp(p-s) zwischen der Grundwelle des Ansteuersignales us und der Grundwelle der mechanischen Pendelschwingung fp(t) mit dem Pendelfunktionsverlauf Fp(t) durch

A) Eine manuelle Steuerung durch die Schritte

4.1 Aufrufen wenigstens eines werkseitig oder durch einen Benutzer 1 gespeicherten Wertes einer Frequenz und einer Amplitude der Grundwelle des Ansteuersignales us.

4.2 Optionales Verändern einer Frequenz oder einer Amplitude der Grundwelle des Ansteuersignales us durch den Benutzer 1, welche eine vom Benutzer 1 vorgegebene sekundäre Schwingungsemission Esektrg repräsentiert und beibehalten der Frequenz oder der Amplitude der Grundwelle des Ansteuersignales us, bis zur nächsten vom Benutzer 1 durchgeführten Variation der Frequenz oder der Amplitude der Grundwelle des Ansteuersignales us, um dadurch die vom Benutzer 1 gewünschte Schwingungsemission Esektrg zu verändern.

4.3 und optional das Speichern wenigstens eines Wertes einer Frequenz oder einer Amplitude der Grundwelle des Ansteuersignales us in einer Wertetabelle als Wert zum Wiederaufruf (lookup - table) der Einstellung.

B) Selbsttätige Regelung durch die Schritte

5.1 Vorgabe einer angestrebten sekundären Schwingungsemission Esektrg über eine werkseitige Einstellung und/oder über eine Eingabe durch den Benutzer,

5.2 Erfassen der sekundären Schwingungsemission Esekact und Umsetzung in ein analoges oder digitales elektrisches Signal Esekact* über Mittel zur Istwerterfassung, beispielsweise über ein einen akustischen Sensor oder über einen taktil empfindlichen Sensor, wie beispielsweise einen Drucksensor oder einen Beschleunigungssensor oder über andere Mittel zur Umsetzung von mechanischen Schwingungspositionen oder Schwingungsbewegung in kompatible analoge oder digitale elektrische Werte, beispielsweise einen optoelektronischen Sensor, einen kapazitiven Sensor, einen piezoelektrischen Sensor, einen induktiven Sensor, einen magnetischen Sensor oder dergleichen.

5.3. selbsttätige Einstellung und optional kontinuierliches oder in definierten zeitlichen Abständen Nachstellen der Frequenz der Grundwelle des Ansteuersignales us zur Regelung einer Phasendifferenz zwischen der Grundwelle des Ansteuersignales us und der Grundwelle der mechanischen Pendelschwingung fp(t) durch die Ansteuerungselektronik durch einen Funktionsgenerator, beispielsweise einen analogen Signalgenerator oder einem digitalen Mikrocontroller oder Signalprozessor aufgrund einer Differenz, welche ein Minimum annehmen soll zwischen der analogen oder digitalen Vorgabe einer sekundären Sollemission Esektrg* und der erfassten und vom Sensor in ein analoges oder digitales elektrisches Signal umgesetzten sekundären Istemission Esekact*.

Bezugszeichenliste

| | |
|---|---|
| 1 | Benutzer |
| 10 | Mittel zur Sollwerterfassung |
| 100 | Funktionsgenerator |
| 101, 111 | Fkt |
| 102, 112 | f0 |
| 103 | Df |
| 104 | f oder f(+/-) |
| 105, 115 | Amp |
| 106, 116 | Offs |
| 108, 118 | abgespeicherter Wert |
| 109, 119 | vorgebbarer Wert |
| 130 | Reglermodul |
| 131 | analoger oder digitaler Vergleicher |
| 132 | Mittel zur Erfassung des Istwertes Esekact der sekundären Schwingungsemission |
| 200 | Antriebstreiber |
| 300 | Elektromagnet |
| 301 | Erregerspule |
| 302 | Kern aus ferromagnetischem Material |
| 303 | Polschuh oder Joch aus ferromagnetischem Material |
| 304 | erstes Polende |
| 305 | zweites Polende |
| 310 | Pendelantrieb |
| 311 | Pendellager |
| 312 | Pendelhebel |
| cp(p-s) | Phasendifferenz |
| FktParam | Funktionsparameter |
| Fue(t) | elektrisches Ansteuerungs-Funktionssignal |
| Esektrg | Sollwert der sekundären Schwingungsemission |
| Esektrg* | elektrischer Sollwert der sekundären Schwingungsemission |

| Esekact | Istwert der sekundären Schwingungsemission |
|---|---|
| Esekact* | elektrischer Istwert der sekundären Schwingungsemission |
| Y | Längsachse des Pendelantriebs |
| S | magnetischer Südpol |
| N | magnetischer Nordpol |
| P1 | erste Polachse |
| P2 | zweite Polachse |
| us | elektrisches Ansteuersignal |
| ie | Erregerstrom |
| fpres | Pendelresonanzfrequenz |
| fs | Ansteuerwiederholfrequenz |
| Ts | Ansteuerperiode |
| fp | Pendelwiederholfrequenz |
| fp(t) | mechanische Pendelschwingung |
| Fp(t) | Pendelfunktionsverlauf |
| Fs(t) | Ansteuerfunktionsverlauf |
| Aip(f) | Pendelamplitudenspektrum |
| senslim | menschliche oder tierische Wahrnehmungsschwelle |

**Patentansprüche**

1. Pendelantriebs-Ansteuerungsvorrichtung umfassend einen elektromagnetischen Pendelantrieb umfassend eine elektronische Steuerungseinheit und einen Elektromagnet (300) umfassend eine Erregerspule (301) mit einer ersten Polachse (P1) und einen Pendelaktor umfassend einen Dauermagneten (313) mit einer zweiten Polachse (P2) und einen Pendelhebel (312), wobei aufgrund einer magnetischen Krafteinwirkung durch ein magnetisches Kraftfeld des Elektromagneten (300) der Dauermagnet (313) quer zu einer Längsachse (Y) des elektromagnetischen Pendelantriebs bewegbar ist, wobei die Erregerspule (301) mit der ersten Polachse (P1) zur Längsachse (Y) in einen Winkel im Bereich von 0° +/- 30° angeordnet ist und der Dauermagnet mit der zweiten Polachse (P2) zur Längsachse (Y) in einem Winkel im Bereich von 90° +/- 40° angeordnet ist, **gekennzeichnet dadurch, dass** die elektronische Steuerungseinheit Mittel zum Verändern und zum Feststellen einer Phasendifferenz (cp(p-s)) zwischen einer Grundwelle der mechanischen Pendelschwingung fp(t) und einer Grundwelle des elektrischen Ansteuersignals (us) umfasst, über welche eine sekundäre Schwingungsemission (Esekact) des Pendelaktors durch einen Benutzer (1) vorgebbar ist.

2. Pendelantriebs-Ansteuerungsvorrichtung gemäß Anspruch 1, **gekennzeichnet dadurch, dass** die Mittel zum Verändern und zum Feststellen einer Phasendifferenz ($\varphi$(p-s)) ein Mittel zum Verändern und zum Feststellen einer Ansteuerwiederholfrequenz (fs) der Grundwelle des elektrischen Ansteuersignals (us) umfasst.

3. Pendelantriebs-Ansteuerungsvorrichtung gemäß Anspruch 1, **gekennzeichnet dadurch, dass** die Mittel zum Vorgeben einer sekundären Schwingungsemission (Esekact) des Pendelaktors ein Mittel zum Verändern und zum Feststellen einer Amplitude der Grundwelle des elektrischen Ansteuersignals (us) umfasst.

4. Pendelantriebs-Ansteuerungsvorrichtung gemäß einem der Ansprüche 1 bis 3, **gekennzeichnet dadurch, dass** das elektrische Ansteuersignal (us) von einem Funktionsgenerator (100) erzeugt wird, wobei der Funktionsgenerator (100) Mittel zur Eingabe von Funktionsparametern (FktParam) umfasst.

5. Pendelantriebs-Ansteuerungsvorrichtung gemäß Anspruch 5, **gekennzeichnet dadurch, dass** die Funktionsparameter (FktParam) den zeitlichen Verlauf und die Amplitude eines elektrischen Ansteuerungs-Funktionssignals (Fue(t)), optional einen Offset, optional eine Anzahl von Perioden >1 und optional eine Veränderungsrate der Parameter über einen definierten Zeitbereich umfasst.

6. Pendelantriebs-Ansteuerungsvorrichtung gemäß einem der vorhergehenden Ansprüche, **gekennzeichnet dadurch, dass** die Pendelantriebs-Ansteuerungsvorrichtung Mittel zur Vorgabe einer Sollemission (Esektrg) umfasst.

7. Pendelantriebs-Ansteuerungsvorrichtung gemäß Anspruch 7, **gekennzeichnet dadurch, dass** die Pendelantriebs-Ansteuerungsvorrichtung Mittel zur Umwandlung der Sollemission (Esektrg) in einen elektrischen Sollwert der sekundären Schwingungsemission (Esektrg*) umfasst.

8. Pendelantriebs-Ansteuerungsvorrichtung gemäß einem der vorhergehenden Ansprüche, **gekennzeichnet dadurch, dass** die Pendelantriebs-Ansteuerungsvorrichtung Mittel zur Erfassung eines Istwertes der sekundären Schwingungsemission (Esekact) umfasst.

9. Pendelantriebs-Ansteuerungsvorrichtung gemäß Anspruch 9, **gekennzeichnet dadurch, dass** die Pendelantriebs-Ansteuerungsvorrichtung Mittel zur Umwandlung eines Istwertes der sekundären Schwingungsemission (Esekact) in einen elektrischen Istwert der sekundären Schwingungsemission (Esekact*) umfasst.

10. Pendelantriebs-Ansteuerungsvorrichtung gemäß einem der vorhergehenden Ansprüche 8 bis 10, **gekennzeichnet dadurch, dass** die Pendelantriebs-Ansteuerungsvorrichtung Mittel zum Vergleich des Sollwertes (Esekact*) mit dem Istwert (Esekact*) der sekundären Schwingungsemission (Esekact*) umfasst.

11. Pendelantriebs-Ansteuerungsvorrichtung gemäß Anspruch 11, **gekennzeichnet dadurch, dass** das Ergebnis des Vergleichs in einem analogen oder digitalen Vergleicher (131) durch ein Differenzsignal Desek (122) repräsentiert wird, welches die Eingangsgröße eines Reglermoduls (130) bildet.

12. Pendelantriebs-Ansteuerungsvorrichtung gemäß Anspruch 12, **gekennzeichnet dadurch, dass** das Reglermodul (130) die Frequenz oder die Amplitude der Grundwelle des elektrischen Ansteuerungs-Funktionssignals (Fue(t)) dahingehend verändert, dass das Differenzsignal Desek (122) ein Minimum einnimmt.

13. Pendelantriebs-Ansteuerungsvorrichtung gemäß Anspruch 12, **gekennzeichnet dadurch, dass** das Reglermodul (130) die Funktionsparameter dahingehend verändert, dass das Differenzsignal Desek (122) ein Minimum einnimmt.

14. Pendelantriebs-Ansteuerungsverfahren zur Einstellung der gewünschten sekundären Schwingungsemission umfassend die Schritte zur manuellen Steuerung

- Bereitstellen eines elektromagnetischen Pendelaktors umfassend einen elektromagnetischen Pendelantrieb umfassend eine elektronische Steuerungseinheit und einen Elektromagnet (300) umfassend eine Erregerspule (301) mit einer ersten Polachse (P1) und einen Pendelaktor umfassend einen Dauermagneten (313) mit einer zweiten Polachse (P2) und einen Pendelhebel (312), wobei aufgrund einer magnetischen Krafteinwirkung durch ein magnetisches Kraftfeld des Elektromagneten (300) der Dauermagnet (313) quer zu einer Längsachse (Y) des elektromagnetischen Pendelantriebs bewegbar ist, wobei die Erregerspule (301) mit der ersten Polachse (P1) zur Längsachse (Y) in einen Winkel im Bereich von 0° +/- 30° angeordnet ist und der Dauermagnet mit der zweiten Polachse (P2) zur Längsachse (Y) in einem Winkel im Bereich von 90° +/- 40° angeordnet ist,
- Bereitstellen einer erfindungsgemäßen Ansteuerungsvorrichtung und eines Funktionsgenerators (100) zur Einstellung einer Phasendifferenz ($\varphi$(p-s)) zwischen einer Grundwelle eines Ansteuersignales (us) und einer Grundwelle einer mechanischen Pendelschwingung fp(t) mit einem Pendelfunktionsverlauf (Fp(t)),
- Variation der Frequenz oder der Amplitude der Grundwelle des Ansteuersignales (us) zur Steuerung der Phasendifferenz ($\varphi$(p-s)) zwischen der Grundwelle des Ansteuersignales (us) und der Grundwelle der mechanischen Pendelschwingung fp(t) mit dem Pendelfunktionsverlauf (Fp(t)) durch den Benutzer (1),
- Aufrufen wenigstens eines werkseitig oder durch den Benutzer gespeicherten Wertes einer Frequenz und einer Amplitude der Grundwelle des Ansteuersignales (us),
- Optionales Verändern einer Frequenz oder einer Amplitude der Grundwelle des Ansteuersignales (us), welche eine vom Benutzer (1) vorgegebene sekundäre Schwingungsemission (Esektrg) repräsentiert und beibehalten der Frequenz oder der Amplitude der Grundwelle des Ansteuersignales (us) bis zur nächsten vom Benutzer (1) durchgeführten Variation der Frequenz oder der Amplitude der Grundwelle des Ansteuersignales (us), um dadurch die vom Benutzer (1) gewünschte Schwingungsemission (Esektrg) zu verändern
- und optional das Speichern wenigstens eines Wertes einer Frequenz oder einer Amplitude der Grundwelle des Ansteuersignales (us) in einer Wertetabelle als Wert zum Wiederaufruf (lookup - table) der Einstellung.

15. Pendelantriebs-Ansteuerungsverfahren zur Einstellung der gewünschten sekundären Schwingungsemission umfassend die Schritte zur Regelung

- Bereitstellen eines elektromagnetischen Pendelaktors umfassend einen elektromagnetischen Pendelantrieb umfassend eine elektronische Steuerungseinheit und einen Elektromagnet (300) umfassend eine Erregerspule (301) mit einer ersten Polachse (P1) und einen Pendelaktor umfassend einen Dauermagneten (313) mit einer zweiten Polachse (P2) und einen Pendelhebel (312), wobei aufgrund einer magnetischen Krafteinwirkung durch ein magnetisches Kraftfeld des Elektromagneten (300) der Dauermagnet (313) quer zu einer Längsachse (Y)

des elektromagnetischen Pendelantriebs bewegbar ist, wobei die Erregerspule (301) mit der ersten Polachse (P1) zur Längsachse (Y) in einen Winkel im Bereich von 0° +/- 30° angeordnet ist, und der Dauermagnet mit der zweiten Polachse (P2) zur Längsachse (Y) in einem Winkel im Bereich von 90° +/- 40° angeordnet ist

- Bereitstellen einer erfindungsgemäßen Ansteuerungsvorrichtung und eines Funktionsgenerators (100) zur Einstellung einer Phasendifferenz ($\varphi$(p-s)) zwischen einer Grundwelle eines Ansteuersignales (us) und einer Grundwelle einer mechanischen Pendelschwingung fp(t) mit einem Pendelfunktionsverlauf (Fp(t)),

- Vorgabe einer angestrebten sekundären Schwingungsemission (Esektrg) über eine werkseitige Einstellung und/oder über eine Eingabe durch den Benutzer,

- Erfassen der sekundären Schwingungsemission (Esekact) und Umsetzung in ein analoges oder digitales elektrisches Signal (Esekact*) über Mittel zur Istwerterfassung, beispielsweise über ein einen akustischen Sensor oder über einen taktil empfindlichen Sensor, wie beispielsweise einen Drucksensor oder einen Beschleunigungssensor oder über andere Mittel zur Umsetzung von mechanischen Schwingungspositionen oder Schwingungsbewegung in kompatible analoge oder digitale elektrische Werte, beispielsweise einen optoelektronischen Sensor, einen kapazitiven Sensor, einen piezoelektrischen Sensor, einen induktiven Sensor, einen magnetischen Sensor oder dergleichen,

- selbsttätige Einstellung und optional kontinuierliches oder in definierten zeitlichen Abständen Nachstellen der Frequenz der Grundwelle des Ansteuersignales us zur Regelung einer Phasendifferenz zwischen der Grundwelle des Ansteuersignales us und der Grundwelle der mechanischen Pendelschwingung fp(t) durch die Ansteuerungselektronik durch einen Funktionsgenerator, beispielsweise einen analogen Signalgenerator oder einem digitalen Mikrocontroller oder Signalprozessor aufgrund einer Differenz, welche ein Minimum annehmen soll zwischen der analogen oder digitalen Vorgabe einer sekundären Sollemission (Esektrg*) und der erfassten und vom Sensor in ein analoges oder digitales elektrisches Signal umgesetzten sekundären Istemission (Esekact*).

Fig. 1a

Fig. 1b

Fig. 2a

111

[Fkt]

100

112

[f0]

115

[Amp]

FktParam

116

[Offs]

118

[Store #]

Fue(t)

119

[Load #]

120

Esektrg

10

min / max / val#

121    Esektrg*

122    Desek*

Fig. 2b

Fig. 3

Fig. 4

Fig. 5a

Fig. 5b

Europäisches Patentamt
European Patent Office
Office européen des brevets

## EUROPÄISCHER RECHERCHENBERICHT

**Nummer der Anmeldung**

EP 24 15 4546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2021/160219 A1 (POETSCH) 19. August 2021 (2021-08-19) * Abbildungen 4-6 * * Ansprüche 10,17 * ----- | 1-15 | INV. H01F7/14 H01F7/18 H02K33/10 |
| A | WO 2015/010780 A2 (MEIER) 29. Januar 2015 (2015-01-29) * Seite 12, Absatz 3 * ----- | 1-15 | |

**RECHERCHIERTE SACHGEBIETE (IPC)**

H01F
H02K

Der vorliegende Recherchenbericht wurde für alle Patentansprüche erstellt

| Recherchenort | Abschlußdatum der Recherche | Prüfer |
|---|---|---|
| München | 11. Juni 2024 | Subke, Kai-Olaf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                EP 24 15 4546

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-2024

| Im Recherchenbericht angeführtes Patentdokument | Datum der Veröffentlichung | Mitglied(er) der Patentfamilie | Datum der Veröffentlichung |
|---|---|---|---|
| WO 2021160219 A1 | 19-08-2021 | CN 115087348 A | 20-09-2022 |
| | | DE 112021000972 A5 | 24-11-2022 |
| | | EP 4102964 A1 | 21-12-2022 |
| | | US 2023072283 A1 | 09-03-2023 |
| | | WO 2021160219 A1 | 19-08-2021 |
| WO 2015010780 A2 | 29-01-2015 | EP 3022444 A2 | 25-05-2016 |
| | | WO 2015010780 A2 | 29-01-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2021160219 A1

**In der Beschreibung aufgeführte Nicht-Patentliteratur**

- Steuerung und Regelung sind jeweils differenzierte Teilgebiete der Kybernetik. **HORST CZICHOS.** Die Unterschiede sind beispielsweise im Fachbuch "Mechatronik" 2. 2008